# EUROPEAN PATENT APPLICATION

(11) **EP 3 874 967 A1**
(43) Date of publication of application: **08.09.2021**
(21) Application number: 20888743.0
(22) Date of filing: 24.12.2020
(51) Int. Cl.: A23L 27/00

(54) **ORAL COMPOSITION HAVING INCREASED SWEETNESS**

(30) Priority: 27.12.2019 JP 2019238754; 05.06.2020 JP 2020098801
(71) Applicant: Suntory Holdings Limited, Osaka 530-8203 (JP)
(72) Inventor: Fujie, Akiko, Kanagawa 2110067 (JP); Ohkuri, Tadahiro, Kanagawa 2110067 (JP); Yokoo, Yoshiaki, Kanagawa 2110067 (JP)
(74) Representative: Mewburn Ellis LLP
(86) International application number: PCT/JP2020/048463
(87) International publication number: WO 2021/132467

(57) **Abstract**

The present invention relates to an oral composition with an enhanced sweetness and a method for producing the oral composition. The present invention also relates to a method for enhancing a degree of sweetness of an oral composition and a concentrate for providing an oral composition.

## Description

### TECHNICAL FIELD

The present invention relates to an oral composition with an enhanced sweetness and a method for producing such an oral composition. The present invention also relates to a method for enhancing a degree of sweetness of an oral composition and a concentrate for providing an oral composition.

### BACKGROUND ART

Humans have five sensory systems, and the sense of taste is one of the sensory systems of humans. The taste receptor organs to receive tastes are called taste buds, and exist on the fungiform papillae over a wide area, mainly on the tip of the tongue, on the vallate papillae on a limited area of the back of the tongue, and on the foliate papillae. The taste buds are cell assemblies composed of elongate cells, called taste cells, and basal cells. The taste cells protrude microvilli toward the tongue surface, and form synapses at the bottoms of the cells with taste nerve fibers entering the taste buds. Tastes that we usually sense are transmitted as taste information via the taste nerves to the brain, where the tastes are perceived. Known taste receptors of sweetness include T1R2 and T1R3. T1R2 and T1R3 are reported to form hetero-dimers (Non-patent Literatures 1 to 3).

Although various studies have been made on the sense of taste, little has been revealed yet in this field. We usually experience various tastes of foods. Foods that seem to be tasty have appropriately mixed and well-harmonized tastes. The taste of food may be tasted as a single taste in some cases, but is often tasted as a mixed taste of various tastes, which are associated with one another.

Meanwhile, foods have been required to have lower calories in addition to a good taste in recent years. This relates to the fact that lifestyle-related diseases such as obesity and diabetes are regarded as a problem.

However, to produce lower-calorie foods, their sugar concentration has to be kept low. This is an obstacle to providing foods that exhibit low calories and a good taste.

As an example of a contrast effect, which is an interaction of tastes, there has long been known a phenomenon in which the addition of salt to sweet redbean soup enhances sweetness. There is an example that reports the interaction between saltiness and sweetness by focusing on this phenomenon, and it is concluded that the interaction between sweetness and saltiness requires sweetness that is strong to a certain degree (a 15% solution) and a salt concentration that is high to a certain degree (0.1 to 0.2%) (Non Patent Literature 4).

Further, studies have been also made on the increase of a sweetness by adding sodium in a low concentration to a natural sugar and a specific high-intensity sweetener (Patent Literature 1).

### CITATION LIST

### Patent Literature

Patent Literature 1: International Publication No. WO2018/225817

### Non-Patent Literature

Non-Patent Literature 1: Zhao G. Q., Zhang Y., Hoon M. A., Chandrashekar J., Erlenbach I., Ryba N. J. P., and Zuker1 C. S., Cell, 2003, Vol. 115, 255-266
Non-Patent Literature 2: Li X, Staszewski L, Xu H, Durick K, Zoller M, Adler E., Proc Natl Acad Sci USA. 2002,99(7), 4692-4696.
Non-Patent Literature 3: Fernstrom J. D., Munger S. D., Sclafani A., de Araujo I. E., Roberts A., and Molinary S., J. Nutr. 2012. Vol. 142: 1134S-1141S
Non-Patent Literature 4: Ayumi Uchida, Nao Takagi, Rieko Horikiri, Miho Matsue, Yumiko Uchiyama and Masashi Omori, Research Bulletin of Otsuma Women's University for Home Economics -No.49 (2013. 3)

### SUMMARY OF THE INVENTION

### Problem to be Solved by the Invention

Under the above circumstances, the development of a novel method capable of enhancing sweetness of a high-intensity sweetener has been much awaited.

### Means for Solving the Problem

The present inventors succeeded for the first time in enhancing the sweetness of a high-intensity sweetener by containing a specific high-intensity sweetener, and sodium and an amino acid or a derivative or a salt thereof in a concentration so low as to not be detectable by the human.

That is, the present invention comprises inventions of the following embodiments.
[1] An oral composition comprising:
   (a) a high-intensity sweetener having a good taste quality in an amount corresponding to a sweetness intensity X1,
   (b) a sodium source of less than 10 mM, and
   (c) an amino acid or a derivative or a salt thereof in an amount less than a taste recognition threshold,
   wherein the oral composition has a sweetness of a sweetness intensity X2 exhibited by the components (a) to (c) and 0.1 < X1 < X2 is satisfied.
[2] The oral composition according to [1], wherein the amino acid includes an amino acid selected from a basic amino acid, a neutral amino acid having an alkyl group, an OH group or an amide group on a side chain, and a combination thereof.
[3] The oral composition according to [1] or [2], wherein the oral composition has a sweetness of a sweetness intensity X3 exhibited by the components (a) and (b) and 0.1 < X1 < X3 < X2 is satisfied.
[4] The oral composition according to any of [1] to [3], further comprising a low-intensity sweetener.
[5] The oral composition according to any of [1] to [4], wherein the high-intensity sweetener having a good taste quality comprises rebaudioside D, rebaudioside M, mogroside V, a luo han guo extract, and a combination thereof.
[5-1] The oral composition according to any of [1] to [4], wherein the high-intensity sweetener having a good taste quality comprises a high-intensity sweetener selected from rebaudioside D, rebaudioside M, mogroside V, a luo han guo extract, and a combination thereof.
[6] The oral composition according to any of [1] to [5], wherein the amino acid is one or more selected from an amino acid having a molecular weight of 70 to 260.
[6-1] The oral composition according to any of [1] to [5-1], wherein the amino acid is one or more selected from an amino acid having a molecular weight of 70 to 260.
[7] The oral composition according to any of [1] to [6], wherein the amino acid comprises an amino acid selected from glycine, alanine, valine, isoleucine, leucine, serine, threonine, glutamine, asparagine, arginine, lysine, histidine, and a combination thereof.
[7-1] The oral composition according to any of [1] to [6-1], wherein the amino acid comprises an amino acid selected from glycine, alanine, valine, isoleucine, leucine, serine, threonine, glutamine, asparagine, arginine, lysine, histidine, and a combination thereof.
[8] The oral composition according to any of [4] to [7], wherein the low-intensity sweetener comprises a sweetener selected from hexose, pentose, tetrose, a polysaccharide having a terminal sugar of aldose or ketose, a sugar alcohol, and a combination thereof.
[8-1] The oral composition according to any of [4] to [7-1], wherein the low-intensity sweetener comprises a sweetener selected from hexose, pentose, tetrose, a polysaccharide having a terminal sugar of aldose or ketose, a sugar alcohol, and a combination thereof.
[9] The oral composition according to any of [4] to [8], wherein the low-intensity sweetener comprises a sweetener selected from glucose, sucrose, fructose, maltose, an oligosaccharide, a high-fructose corn syrup, lactose, psicose, allose, tagatose, xylose, ribose, and a combination thereof.
[9-1] The oral composition according to any of [4] to [8-1], wherein the low-intensity sweetener comprises a sweetener selected from glucose, sucrose, fructose, maltose, an oligosaccharide, a high-fructose corn syrup, lactose, psicose, allose, tagatose, xylose, ribose, and a combination thereof.
[10] The oral composition according to any of [1] to [9], which is a food.
[10-1] The oral composition according to any of [1] to [9-1], which is a food.
[11] The oral composition according to [10], wherein the food is a beverage.
[11-1] The oral composition according to [10-1], wherein the food is a beverage.
[12] A method for producing the oral composition according to any of [1] to [11] comprising:
   (a) adding a high-intensity sweetener having a good taste quality in an amount corresponding to a sweetness intensity X1,
   (b) adding a sodium source of less than 10 mM, and
   (c) adding an amino acid or a derivative or a salt thereof in an amount less than a taste recognition threshold.
[12-1] A method for producing the oral composition according to any of [1] to [11-1] comprising:
   (a) adding a high-intensity sweetener having a good taste quality in an amount corresponding to a sweetness intensity X1,
   (b) adding a sodium source of less than 10 mM, and
   (c) adding an amino acid or a derivative or a salt thereof in an amount less than a taste recognition threshold.
[13] A method for enhancing a sweetness of an oral composition containing a high-intensity sweetener having a good taste quality, comprising adding a sodium source of less than 10 mM and an amino acid of less than a taste recognition threshold to the oral composition.

### ADVANTAGEOUS EFFECTS OF THE INVENTION

The present invention provides an oral composition having, not a plain sweetness obtained by an additional amount of a high-intensity sweetener having a good taste quality used, but an enhanced sweetness.

### BRIEF DESCRIPTION OF THE DRAWING

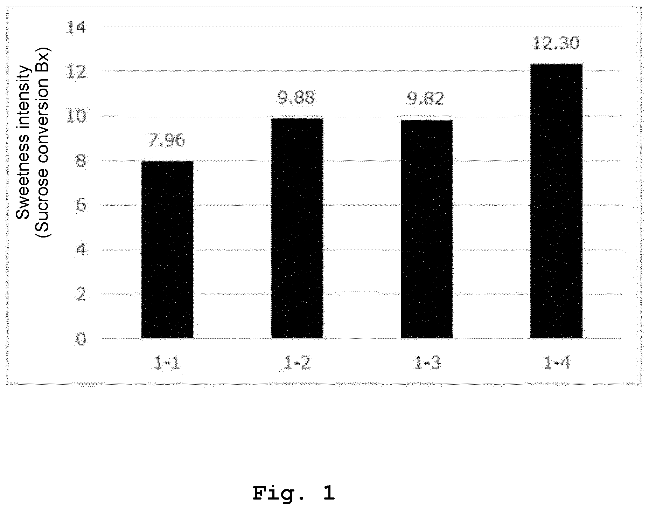

Figure 1 is a drawing showing sweetness intensity measurement results of Example 4.

### DESCRIPTION OF EMBODIMENTS

Hereinafter, the present invention will be described in detail. The following embodiments are examples to describe the present invention and do not intend to limit the present invention only to these embodiments. The present invention can be carried out in various embodiments without departing from the spirit of the present invention.

Note that all of the literature, laid-open publications, patent publications, and other patent literature cited herein is deemed to be incorporated by reference into the present description. The present specification incorporates the contents of the specifications and the drawings of Japanese Patent Applications No. 2019-238754 and No. 2020-098801, filed on December 27, 2019 and June 5, 2020, respectively, from which the present application claims priority.

### 1. Oral composition having a high-intensity sweetener of good taste quality with an enhanced sweetness

The present invention provides the following oral composition (hereinafter referred to as "the oral composition of the present invention") as the first aspect.

An oral composition comprising:
(a) a high-intensity sweetener having a good taste quality in an amount corresponding to a sweetness intensity X1
(b) a sodium source of less than 10 mM, and
(c) an amino acid or a derivative or a salt thereof in an amount less than a taste recognition threshold,
wherein the oral composition has a sweetness of a sweetness intensity X2 exhibited by the components (a) to (c) and 0.1 < X1 < X2 is satisfied.

In other words, in the oral composition of the present invention, the component having a sweetness is (a) a high-intensity sweetener having a good taste quality in an amount corresponding to a sweetness intensity X1, and the sweetness of the oral composition of the present invention would be a sweetness intensity X1 when calculated. However, the presence of (b) the sodium source at less than 10 mM and (c) the amino acid, or derivative or salt thereof, in an amount less than a taste recognition threshold, in the oral composition even in low concentrations enhances the sweetness of (a) the high-intensity sweetener having a good taste quality in an amount corresponding to a sweetness intensity X1, to a sweetness intensity X2 (where 0.1 < X1 < X2 is satisfied). The present invention may possibly include additional components such as an acidulant, a flavor, and an extract, in addition to these components (a) to (c). The oral composition in an embodiment of the present invention does not contain a sweet component as a sweetener other than (a) the high-intensity sweetener having a good taste quality in an amount corresponding to a sweetness intensity X1.

### ORAL COMPOSITION

As used herein, "oral composition" is a solid, a fluid, a liquid, or a mixture of these, and is a general term for any orally eatable compositions. The oral compositions of the present invention encompass foods and the foods encompass beverages. Examples of the oral composition of the present invention include nutritional supplement foods, health foods, functional foods, foods for toddlers, infant formulae, formulae for premature babies, and foods for the aged.

Nutritional supplement foods refers to foods with a fortified specific nutritional component. Health foods refers to foods considered to be healthy or beneficial to health and include nutritional supplement foods, natural foods, and diet foods. Functional foods refers to foods to supply nutritional components serving regulatory functions of the body, and has the same definition as food for specified health use. Food for toddlers refers to foods to feed children aged up to about 6 years old. Foods for the aged refers to foods treated for easier digestion and absorption compared with untreated foods. Infant formulae refers to formulae to feed infants aged up to about 1 year old. Formulae for premature babies refers to formulae to feed premature babies aged up to about 6 months.

The form of the oral composition is not particularly limited and it can be in various forms. Examples of form include beverages, snacks, and supplements. A beverage can be an alcoholic beverage or non-alcoholic beverage. Examples of the non-alcoholic beverage include non-alcoholic beers, malt beverages, probiotic beverages, cocoas, isotonic beverages, nutrient beverages, tea-based beverages, coffee beverages, carbonated beverages, functional beverages, fruit- and vegetable-based beverages, milk-based beverages, soymilk beverages, and flavored waters, but not limited thereto.

Non-alcoholic beers as used herein means carbonated beverages having a beer-like flavor, which are non-fermented non-alcoholic type substantially free of alcohols. The non-alcoholic beers herein do not exclude beverages containing alcohol in extremely small amounts that cannot be detected.

When the composition of the present invention is a tea-based beverage, it is preferable to be an English tea-based beverage or a sugar-free tea beverage. Examples of the sugar-free tea beverage include green tea beverages, oolong tea beverages, roasted barley tea beverages, roasted brown rice tea beverages, tear grass tea beverages, and sugar-free English tea beverages. The coffee beverages can be either packed-in-container coffees or liquid coffees.

It is preferable for the form of carbonated beverages to be cola-flavored beverages, clear carbonated beverages, ginger ales, fruit juice-based carbonated beverages, or carbonated beverages containing milk or sugar-free carbonated beverage. The functional beverages include isotonic beverages, energy beverages, health support drinks and jelly beverages in pouches.

Examples of the fruit- and vegetable-based beverage include 100% fruit juice beverages, beverages containing fruits, soft beverages containing a low concentration of a fruit juice, fruit grains-containing fruit beverages, and beverages with flesh of fruits. The milk-based beverages include cow's milk, yogurt beverages, probiotic beverages, and soft beverages containing milk, and the soymilk beverages include soymilk or soybean beverages.

The alcoholic beverages refer to beverages containing an alcohol raw material. The alcoholic beverage can be a *chuhai.* Examples of the alcohol raw material include brewed liquors, distilled liquors, and mixed liquors. Examples of the brewed liquor include wines and beers. Example of the distilled liquor include spirits (for example, gins, vodkas, rums, tequilas and new spirits, and material alcohols), liquors, whiskies (for example, whiskies and brandies), and *shochus.* The alcoholic beverages herein can be any beverages containing detectable alcohol and, for example, contain alcohol of 1 vol% or more, 2 vol% or more, 3 vol% or more, 4 vol% or more, and 5 vol% or more.

Examples of processed food include processed foods of grain, seafood and meat (bread, noodles, tortillas, pasta, ham, bacon, sausages, *kamaboko, ageten,* and *hanpen) .*

Examples of dairy products include butter, cheese, yogurt, and ghee.

Examples of snacks include candies, jams, chewing gums, ice creams, snack confectionery, cookies, biscuits, cakes, wafers, sweet breads, chocolates, Japanese sweets, but not limited thereto.

An oral composition of the present invention may be in a form of a pharmaceutical product or a quasi-drug such as fine granules, tablets, granules, powders, capsules (including soft capsules and hard capsules), chewable tablets, syrups, mouthwashes, tooth pastes, oral ointments, gargles, or sprays for throat, or in a processed form such as natural liquid meals, polymeric formulae, or component nutritional meals, health tonics, enteral nutrients in which the composition of the present invention is contained in proteins, saccharides, fats, trace elements, vitamins, emulsifiers, and flavors. Thus, the present invention also provides oral products such as pharmaceutical products, quasi-drugs, natural liquid meals, polymeric formulae, component nutritional meals, health tonics, and enteral nutrients comprising the components (a) to (c) wherein an amount of component (b) is less than 10 mM as sodium and an amount of component (c) is less than a taste recognition threshold. Note that oral product is a general term for any products introduced into the mouth whether or not ingested.

Further, the oral composition of the present invention may be sterilized while packed in a container.

### SWEETNESS INTENSITY

As used herein, "sweetness intensity" means an intensity of sweetness of a substance. For example, when the sweetness intensity of sucrose per unit concentration Brix 1 is defined as a degree of sweetness of 1, the degree of sweetness of glucose is 0.6 to 0.7 (median value 0.65). A numerical value obtained by multiplying this degree of sweetness by a concentration Brix value of glucose is the sweetness intensity of glucose. Thus, when a concentration of glucose is Brix 1.5, the sweetness intensity of glucose is 0.65 x 1.5 = 0.975.

**Table 1**

| Sugar (D-form) | Degree of sweetness |
|---|---|
| Sucrose | 1 |
| Glucose | 0.6 to 0.7 |
| Fructose | 1.3 to 1.7 |
| Maltose | 0.4 |
| Fructooligosaccharide | 0.6 |
| Maltooligosaccharide | 0.3 |
| Isomaltooligosaccharide | 0.4 to 0.5 |
| Galactooligosaccharide | 0.7 |
| High-fructose corn syrup | 0.8 to 0.9 |
| Lactose | 0.2 to 0.3 |
| Psicose | 0.7 |
| Allose | 0.8 |
| Tagatose | 0.9 |

The oral composition of the present invention contains, as described above, a high-intensity sweetener having a good taste quality in an amount corresponding to a sweetness intensity X1, and has a sweetness having a sweetness intensity X2 exhibited by the components (a) to (c), 0.1 < X1 < X2 being satisfied.

The X1 in "sweetness intensity X1" can be more than 0.1 and 0.5 or less, more than 0.1 and 1.0 or less, more than 0.1 and 1.5 or less, more than 0.1 and 2.0 or less, more than 0.1 and 2.5 or less, more than 0.1 and 3.0 or less, more than 0.1 and 3.5 or less, more than 0.1 and 4.0 or less, more than 0.1 and 4.5 or less, more than 0. 1 and 5.0 or less, more than 0.1 and 5.5 or less, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, 3.0 to 5.5, 2.0 to 6.5, 2.0 to 7.0, 2.0 to 7.5, 2.0 to 6.0, 2.5 to 7.0, 2.5 to 7.5, 2.5 to 6.0, 2.5 to 6.5, 3.0 to 6.0, 3.0 to 6.5, 3.0 to 7.0, 3.0 to 7.5, 3.0 to 8.0, 3.0 to 8.5, 3.0 to 9.0, 3.0 to 9.5, 3.5 to 7.0, 3.5 to 7.5, 3.5 to 8.0, 4.5 to 8.5, 3.5 to 9.0, 3.5 to 9.5, 4.0 to 7.5, 4.0 to 8.0, 4.0 to 8.5, 4.0 to 9.0, 4.0 to 9.5, 3.5 to 8.5, 3.5 to 10.0, 3.5 to 10.5, 3.5 to 11.0, 3.5 to 11.5, 4.0 to 11.5.

The X1 can also be more than 0.1 and 6.0 or less, more than 0.1 and 6.5 or less, more than 0.1 and 7.0 or less, more than 0.1 and 7.5 or less, more than 0.1 and 8.0 or less, more than 0.1 and 8.5 or less, more than 0.1 and 9.0 or less, more than 0.1 and 9.5 or less, more than 0.1 and 10.0 or less, more than 0.1 and 10.5 or less, more than 0.1 and 11.0 or less, more than 0.1 and 11.5 or less, more than 0.1 and 12.0 or less, more than 0.1 and 13.0 or less, more than 0.1 and 14.0 or less, more than 0.1 and 15.0 or less, more than 0.1 and 16.0 or less, more than 0.1 and 17.0 or less, more than 0.1 and 18.0 or less, 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1. 0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11. 0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3. 5 to 16.0, 3.5 to 17.0, 3.5 to 18.0, 4.0 to 4.5, 4.0 to 5.0, 4.0 to 5.5, 4.0 to 6.0, 4.0 to 6.5, 4.0 to 7.0, 4.0 to 10.0, 4.0 to 10.5, 4.0 to 11.0, 4.0 to 12.0, 4.0 to 13.0, 4.0 to 14.0, 4. 0 to 15.0, 4.0 to 16.0, 4.0 to 17.0, 4.0 to 18.0.

In embodiments of the present invention, X1 is preferably 0.5 to 10.0, more preferably 1.5 to 9.0, and still more preferably 2.0 to 8.0. Further, in other embodiments of the present invention, X1 is preferably 0.5 to 5.5, more preferably 1.0 to 5.5, and still more preferably 2.0 to 5.0.

The amount corresponding to a sweetness intensity X1 of the high-intensity sweetener refers to an amount which provides a sweetness of sweetness intensity X1 under conditions win which the high-intensity sweetener is dissolved in water having the same volume as the oral composition of the present invention at 20°C.

Further, the amount of the high-intensity sweetener having a good taste quality can be Pa ppm, and Pa ppm herein refers to an amount corresponding to the sweetness intensity X1. Pa herein can be a value of about 20 to about 800, about 25 to about 800, about 30 to about 800, about 35 to about 800, about 40 to about 800, about 45 to about 800, about 50 to about 800, about 55 to about 800, about 20 to about 750, about 25 to about 750, about 30 to about 750, about 35 to about 750, about 40 to about 750, about 45 to about 750, about 50 to about 750, about 55 to about 750, about 20 to about 700, about 25 to about 700, about 30 to about 700, about 35 to about 700, about 40 to about 700, about 45 to about 700, about 50 to about 700, about 55 to about 700, about 20 to about 650, about 25 to about 650, about 30 to about 650, about 35 to about 650, about 40 to about 650, about 45 to about 650, about 50 to about 650, about 55 to about 650, about 20 to about 600, about 25 to about 600, about 30 to about 600, about 35 to about 600, about 40 to about 600, about 45 to about 600, about 50 to about 600, about 55 to about 600, about 20 to about 550, about 25 to about 550, about 30 to about 550, about 35 to about 550, about 40 to about 550, about 45 to about 550, about 50 to about 550, about 55 to about 550, about 20 to about 540, about 25 to about 540, about 30 to about 540, about 35 to about 540, about 40 to about 540, about 45 to about 540, about 50 to about 540, about 55 to about 540, about 20 to about 530, about 25 to about 530, about 30 to about 530, about 35 to about 530, about 40 to about 530, about 45 to about 530, about 50 to about 530, about 55 to about 530, about 20 to about 520, about 25 to about 520, about 30 to about 520, about 35 to about 520, about 40 to about 520, about 45 to about 520, about 50 to about 520, about 55 to about 520, about 20 to about 510, about 25 to about 510, about 30 to about 510, about 35 to about 510, about 40 to about 510, about 45 to about 510, about 50 to about 510, about 55 to about 510, about 20 to about 505, about 25 to about 505, about 30 to about 505, about 35 to about 505, about 40 to about 505, about 45 to about 505, about 50 to about 505, about 55 to about 505, about 20 to about 500, about 25 to about 500, about 30 to about 500, about 35 to about 500, about 40 to about 500, about 45 to about 500, about 50 to about 500, about 55 to about 500, about 20 to about 495, about 25 to about 495, about 30 to about 495, about 35 to about 495, about 40 to about 495, about 45 to about 495, about 50 to about 495, about 55 to about 495, about 20 to about 490, about 25 to about 490, about 30 to about 490, about 35 to about 490, about 40 to about 490, about 45 to about 490, about 50 to about 490, about 55 to about 490.

Pa can also be a value of 1 to 1500, 1 to 1200, 5 to 1200, 1 to 1000, 5 to 1000, 10 to 1000, 1 to 900, 5 to 900, 10 to 900, 15 to 900, 20 to 900, 25 to 900, 30 to 900, 35 to 900, 40 to 900, 45 to 900, 50 to 900, 55 to 900, 1 to 800, 5 to 800, 10 to 800, 15 to 800, 20 to 800, 25 to 800, 30 to 800, 35 to 800, 40 to 800, 45 to 800, 50 to 800, 55 to 800, 1 to 700, 5 to 700, 10 to 700, 15 to 700, 20 to 700, 25 to 700, 30 to 700, 35 to 700, 40 to 700, 45 to 700, 50 to 700, 55 to 700, 1 to 600, 5 to 600, 10 to 600, 15 to 600, 20 to 600, 25 to 600, 30 to 600, 35 to 600, 40 to 600, 45 to 600, 50 to 600, 55 to 600, 1 to 550, 1 to 540, 1 to 530, 1 to 520, 1 to 510, 1 to 505, 1 to 500, 1 to 495, 1 to 490, 5 to 550, 5 to 540, 5 to 530, 5 to 520, 5 to 510, 5 to 505, 5 to 500, 5 to 495, 5 to 490, 10 to 550, 10 to 540, 10 to 530, 10 to 520, 10 to 510, 10 to 505, 10 to 500, 10 to 495, 10 to 490, 15 to 550, 15 to 550, 15 to 530, 15 to 520, 15 to 510, 15 to 505, 15 to 500, 15 to 495, 15 to 490.

Pa can also be a value of about 100 to about 500, about 100 to about 450, about 100 to about 400, about 100 to about 350, about 100 to about 300, about 100 to about 250, about 100 to about 200, about 150 to about 500, about 150 to about 450, about 150 to about 400, about 150 to about 350, about 150 to about 300, about 150 to about 250, about 150 to about 200, about 200 to about 500, about 200 to about 450, about 200 to about 400, about 200 to about 350, about 200 to about 300, about 200 to about 250.

X2 is not particularly limited as long as it is greater than X1 and can be 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1. 0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11. 0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3. 5 to 16.0, 3.5 to 17.0, 3.5 to 18.0, 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, 10.5 to 12.5. X2 can also be 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5. 5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9. 0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16, 10.5 to 15.5.

Further, the oral composition in embodiments of the present invention has a sweetness of a sweetness intensity X3 exhibited by the components (a) and (b) and 0.1 < X1 < X3 < X2 is satisfied. That is, sweetness is more enhanced by the addition of the component (c), the amino acid or derivative or salt thereof, to component (a) the high-intensity sweetener having a good taste quality and component (b) the sodium source, than the combination of the component (a) and the component (b).

X3 is not particularly limited as long as it is greater than X1 and smaller than X2 and can be 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2. 0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 19, 3.0 to 14, 3.0 to 11.5, 3.0 to 9, 3.5 to 19, 3.5 to 14, 3.5 to 11.5, 3.5 to 9, 4.0 to 19, 4.0 to 14, 4.0 to 11.5, 4.0 to 9, 4.5 to 19, 4.5 to 14, 4.5 to 11.5, 4.5 to 9, 5.0 to 19, 5.0 to 14, 5.0 to 11.5, 5.0 to 9, 6.5 to 20, 5.5 to 14, 5.5 to 11.5, 5.5 to 9, 6.019, 6.0 to 14, 6.0 to 11.5, 6.0 to 9, 6.5 to 19, 6.5 to 14, 6.5 to 11.5, 6.5 to 9, 6.5 to 8, 6.5 to 7, 7.0 to 19, 7.0 to 19, 7.0 to 14, 7.0 to 11.5, 7.0 to 9, 7.5 to 19, 7.5 to 14, 7.5 to 11.5, 7.5 to 9, 8.0 to 19, 8.0 to 14, 8.0 to 11.5, 8.0 to 9, 8.5 to 19, 98.5 to 14, 8.5 to 11.5, 8.5 to 9, 9.0 to 19, 9.0 to 14, 9.0 to 11.5, 9.5 to 19, 9.5 to 14, 9.5 to 11.5. X3 can also be 3.0 to 17,3.0 to 15,3.0 to 14.5, 3.0 to 13,3.5 to 17, 3.5 to 15, 3.5 to 14.5, 3.5 to 13, 4.0 to 17, 4.0 to 15, 4.0 to 14.5, 4.0 to 13, 4.5 to 17, 4.5 to 15, 4.5 to 14.5, 4.5 to 13, 5.0 to 17, 5.0 to 15, 5.0 to 14.5, 5.0 to 13, 5.5 to 17, 5.5 to 15, 5.5 to 14.5, 5.5 to 13, 6.0 to 17, 6.0 to 15, 6.0 to 14.5, 6.0 to 13, 6.5 to 17, 6.5 to 15, 6.5 to 14.5, 6.5 to 13, 6.5 to 8, 6.5 to 7, 7.0 to 17, 7.0 to 16, 7.0 to 15, 7.0 to 14.5, 7.0 to 13, 7.5 to 17, 7.5 to 15, 7.5 to 14.5, 7.5 to 13, 8.0 to 17, 8.0 to 15, 8.0 to 14.5, 8.0 to 13, 8.5 to 17, 8. 5 to 15, 8.5 to 14.5, 8.5 to 13, 9.0 to 17, 9.0 to 15, 90 to 14.5, 9.5 to 17, 9.5 to 15, 9.5 to 14.5.

The oral composition of the present invention has an enhanced sweetness as having been already mentioned. Whether or not the sweetness of the oral composition of the present invention is enhanced can be evaluated by panelists who have received sensory training. Further, for the sweetness intensity of the oral composition of the present invention, standard oral compositions (for example, beverages) to be the sweetness standards are prepared with sucrose concentrations assigned as sweetness intensities 1, 2, 3, 4, 5, 6, 7, 8, 9, 10, 11, 12, 13, 14, and 15 and panelists compare the sweetness of the oral composition of the present invention with the sweetnesses of these standard oral compositions thereby to measure the sweetness of the oral composition of the present invention. Note that the standard oral compositions (for example, beverages) having a sweetness intensity of 1, 2, ... 15 are prepared by adding sucrose in such a way that a sucrose content is 1 g/100 g, 2 g/100 g, ... 15 g/100 g to an oral composition to which sucrose has not been added.

Furthermore, of the standard oral compositions having a lower sweetness than the oral composition of the present invention in the above measurement, the standard oral composition having the closest sweetness to that of the oral composition of the present invention is selected and adjusted in such a way as to have the same sweetness as that of the oral composition of the present invention by adding sucrose to the selected standard oral composition, during which a sweetness intensity of the oral composition of the present invention can also be measured from a sucrose content in the adjusted standard oral composition.

Other examples of methods for measuring a sweetness of an oral composition of the present invention include a sweetness intensity rating using Visual Analogue Scale (VAS method). For the VAS method, literature in The Journal of Japanese Society of Stomatognathic Function (2014) 20 pp. 115-129 ("Construction of a Screening Test for Gustatory Function in Four Basic Tastes" by Toyota et al.) and the like can be referred. Specifically, in the measurement of sweetness intensity by the VAS method, for example, evaluators define sweetness intensities as "not sweet at all" at the lower end and "nothing is sweeter than this" at the upper end and, using a piece of paper on which a vertical line indicating the intensities of sweetness on the straight line, assess a sweetness intensity sensed at that time by showing a position on the straight line.

The sweetness intensity of an oral composition of the present invention is not particularly limited as long as it is acceptable as a food, and can be, in terms of the degree of sweetness, for example, 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, 10.5 to 12.5. The sweetness intensity of the oral composition is provided by the above components (a) to (c) and optional additional components.

An energy (total energy) of the oral composition of the present invention can be, depending on the embodiment, 0 to 50 Kcal/100 ml, 0 to 45 Kcal/100 ml, 0 to 40 Kcal/100 ml, 0 to 35 Kcal/100 ml, 0 to 30 Kcal/100 ml, 0 to 24 Kcal/100 ml, 0 to 22 Kcal/100 ml, 0 to 20 Kcal/100 ml, 0 to 15 Kcal/100 ml, 0 to 10 Kcal/100 ml, 0 to 5 Kcal/100 ml, 0.1 to 50 Kcal/100 ml, 0.1 to 45 Kcal/100 ml, 0.1 to 40 Kcal/100 ml, 0.1 to 35 Kcal/100 ml, 0.1 to 30 Kcal/100 ml, 0.1 to 24 Kcal/100 ml, 0.1 to 22 Kcal/100 ml, 0.1 to 20 Kcal/100 ml, 0.1 to 15 Kcal/100 ml, 0.1 to 10 Kcal/100 ml, 0.1 to 5 Kcal/100 ml, 1 to 50 Kcal/100 ml, 1 to 45 Kcal/100 ml, 1 to 40 Kcal/100 ml, 1 to 35 Kcal/100 ml, 1 to 30 Kcal/100 ml, 1 to 24 Kcal/100 ml, 1 to 22 Kcal/100 ml, 1 to 20 Kcal/100 ml, 1 to 15 Kcal/100 ml, 1 to 10 Kcal/100 ml, 1 to 5 Kcal/100 ml, 5 to 50 Kcal/100 ml, 5 to 45 Kcal/100 ml, 5 to 40 Kcal/100 ml, 5 to 35 Kcal/100 ml, 5 to 30 Kcal/100 ml, 5 to 24 Kcal/100 ml, 5 to 20 Kcal/100 ml, 5 to 15 Kcal/100 ml, 5 to 10 Kcal/100 ml, 10 to 50 Kcal/100 ml, 10 to 45 Kcal/100 ml, 10 to 40 Kcal/100 ml, 10 to 35 Kcal/100 ml, 10 to 30 Kcal/100 ml, 10 to 24 Kcal/100 ml, 10 to 20 Kcal/100 ml, 10 to 15 Kcal/100 ml, 15 to 50 Kcal/100 ml,

15 to 45 Kcal/100 ml, 15 to 40 Kcal/100 ml, 15 to 35 Kcal/100 ml, 15 to 30 Kcal/100 ml, 15 to 24 Kcal/100 ml, 15 to 20 Kcal/100 ml, 20 to 50 Kcal/100 ml, 20 to 45 Kcal/100 ml, 20 to 40 Kcal/100 ml, 20 to 35 Kcal/100 ml, 20 to 30 Kcal/100 ml, 20 to 24 Kcal/100 ml, 24 to 50 Kcal/100 ml, 24 to 45 Kcal/100 ml, 24 to 40 Kcal/100 ml, 24 to 35 Kcal/100 ml, 24 to 30 Kcal/100 ml.

Further, an energy (total energy, TE) of the oral composition of the present invention can be, depending on an embodiment (for example, an embodiment containing a caloric sweetener), 0 < TE ≤ 50 Kcal/100 ml, 0 < TE ≤ 45 Kcal/100 ml, 0 < TE ≤ 40 Kcal/100 ml, 0 < TE ≤ 35 Kcal/100 ml, 0 < TE ≤ 30 Kcal/100 ml, 0 < TE ≤ 24 Kcal/100 ml, 0 < TE ≤ 22 Kcal/100 ml, 0 < TE ≤ 20 Kcal/100 ml, 0 < TE ≤ 15 Kcal/100 ml, 0 < TE ≤ 10 Kcal/100 ml, 0 < TE ≤ 5 Kcal/100 ml (that is, it is never completely 0).

The components (a) to (c) can be in any combinations. As shown in the examples to be described later, the addition of component (b) and component (c) to component (a) enables provision of a sweetness intensity X2 which is higher than the sweetness intensity X1 of the component (a) alone. That is, the sweetness of component (a) can be enhanced by the components (b) and (c). For this reason, oral compositions such as foods can be produced without using, or with a reduced amount of, highly caloric sucrose while maintaining a sweetness equal to an oral composition containing sucrose. Thus, the design of new low-caloric sweet foods is enabled. In the case of designing a zero-calorie sweet food, a high-intensity sweetener having particularly good taste quality such as RebD and RebM is used for component (a) and D-allulose or erythritol is used as an additional sweet substance thereby to improve the sweetness with a low-concentration amino acid and a low-concentration sodium. In the case of adjusting a food to be not zero-calorie but low-calorie, a caloric sweetener such as sucrose, glucose, fructose, or sorbitol can be contained as an additional sweet substance.

### HIGH-INTENSITY SWEETENER HAVING A GOOD TASTE QUALITY

As used herein, "high-intensity sweetener having a good taste quality" (hereinafter, sometimes abbreviated as "sweetener (a)" or "component (a)") means a high-intensity sweet substance having one or more taste quality characteristics selected from, when compared with rebaudioside A (RebA), (1) less astringent taste, (2) less metallic taste, (3) less aftertaste of sweetness, (4) less bitter taste. Whether or not a certain sweet substance has the above taste quality is already known, or can be determined based on a sensory evaluation. In embodiments of the present invention, the high-intensity sweeteners having a good taste quality may be those naturally occurring in plants and the like or those artificially produced (for example, bioconversion or chemosynthesis) but are preferably naturally occurring sweeteners. As used herein, "naturally occurring" does not mean that a high-intensity sweet substance contained in the oral composition of the present invention is a natural product, rather a high-intensity sweet substance contained in the oral composition of the present invention may be a product (non-naturally occurring product) produced artificially (for example, by bioconversion) provided that the same substance occurs naturally.

Nonrestrictive examples of sweetener (a) include RebD, RebM, neohesperidin dihydrochalcone, glycyrrhizin, thaumatin, monellin, mogroside, rubusoside, curculin, mabinlin, brazzein, pentagin, phyllodulcin, hernandulcin, miraculin, good-taste quality Stevia rebaudiana plant-containing sweet components, Siraitia grosvenorii plant-containing sweet components, Glycyrrhiza glabra plant-containing sweet components, Rubus suavissimus S. Lee plant-containing sweet components, Hydrangea macrophylla var. thunbergii plant-containing sweet components, Sclerochiton ilicifolius plant-containing sweet components, Thaumataococcus daniellii Benth plant-containing sweet components, Dioscoreophyllum volkensii plant-containing sweet components, Curculigo latifolia plant-containing sweet components, Richardella dulcifica plant-containing sweet components, Pentadiplandra brazzeana plant-containing sweet components, Capparis masaikai plant-containing sweet components, Lippia dulcis plant-containing sweet components, and derivatives thereof, and combinations thereof. The sweetener (a) does not contain major components of Stevia sweeteners such as Reb A and stevioside. In specific embodiments, sweetener (a) contains RebD, RebM, a mogroside (for example, mogroside V) or a combination thereof. In other specific embodiments, sweetener (a) contains RebD, RebM, a mogroside (for example, mogroside V), thaumatin, or a combination thereof. In preferable embodiments of the present invention, a high-intensity sweetener having a good taste quality contains RebD, RebM, mogroside V, a Luo han guo extract, or a combination thereof.

The Luo han guo extract as a sweetener is an extract of Luo han guo containing a sweet substance derived from Luo han guo, approved in various countries including Japan as a food additive and commercially available. Examples of sweet substances derived from Luo han guo include mogroside V, mogroside IV, 11-oxo-mogroside V, and Siamenoside I.

Mogroside V is a kind of the major mogrol glycosides contained in Luo han guo and documented to have a good-quality sweetness property, close to sucrose when compared with rebaudioside A.

The Luo han guo extract preferably contains mogroside V and the ratio thereof is not limited and can be 10 wt% or more, 15 wt% or more, 20 wt% or more, 25 wt% or more, 30 wt% or more, 35 wt% or more, 40 wt% or more, 45 wt% or more, 50 wt% or more, 55 wt% or more, 60 wt% or more, 65 wt% or more, 70 wt% or more, and 75 wt% or more, of the total dry weight of a Luo han guo extract. The content of mogroside V can be determined by a known technique such as liquid chromatography. The Luo han guo extract can be obtained by extracting a fruit of Luo han guo (Siraitia grosvenorii) with a suitable solvent (for example, an aqueous solvent such as water, an alcohol solvent such as ethanol or methanol, a mixed solvent of an aqueous solvent and an alcohol solvent such as water-containing ethanol or water-containing methanol), and then optionally carrying out a treatment such as degreasing, purification, concentration, and drying.

The high-intensity sweetener having a good taste quality is contained in an amount corresponding to a sweetness intensity X1 as described above. When the sweetness intensity of sucrose per unit concentration Brix 1 is defined as a degree of sweetness of 1, a degree of sweetness of rebaudioside D is about 225, a degree of sweetness of rebaudioside M is about 230, a degree of sweetness of rebaudioside B is about 325, a degree of sweetness of rebaudioside N is 200 to 250 (median value 225), a degree of sweetness of rebaudioside 0 is 200 to 250 (median value 225), a degree of sweetness of rebaudioside E is 70 to 80 (median value 75), a degree of sweetness of a Luo han guo extract (containing 40% of Mog V) is about 130, a degree of sweetness of mogroside V is about 270, and a degree of sweetness of thaumatin is 2,000. The numerical value obtained by multiplying these degrees of sweetness by a concentration (w/v% (considered to be the same as w/w% in the case of a beverage)) of the high-intensity sweetener having a good taste quality in the oral composition is a sweetness intensity of the high-intensity sweetener having a good taste quality.

In some embodiments, the sweetener (a) contains the following combinations: RebD and RebM, RebD and mogroside V, RebM and mogroside V, RebD and RebM and mogroside V, RebD and neohesperidin dihydrochalcone, RebM and neohesperidin dihydrochalcone, RebD and RebM and neohesperidin dihydrochalcone, mogroside V and neohesperidin dihydrochalcone, RebD and RebM and mogroside V and neohesperidin dihydrochalcone, RebD and brazzein, RebM and brazzein, mogroside V and brazzein, neohesperidin dihydrochalcone and brazzein, RebM and RebD and brazzein, RebM and RebD brazzein and mogroside V, RebM and RebD and brazzein and neohesperidin dihydrochalcone, or RebM and RebD and brazzein and mogroside V and neohesperidin dihydrochalcone.

In other embodiments, the sweetener (a) contains the following combinations: RebD and thaumatin, RebM and thaumatin, mogroside V and thaumatin, RebD and RebM and thaumatin, RebD and mogroside V and thaumatin, RebM and mogroside V and thaumatin, RebD and RebM and mogroside V and thaumatin.

The amount of sweetener (a) contained in the oral composition of an embodiment of the present invention is, in the case when the sweetener (a) contains a combination of a plurality of sweet substances, the amount of all of these sweet substances combined. When the amount of the sweetener (a) is Pa (ppm), Pa can be a value of, for example, about 20 to about 800, about 25 to about 800, about 30 to about 800, about 35 to about 800, about 40 to about 800, about 45 to about 800, about 50 to about 800, about 55 to about 800, about 20 to about 750, about 25 to about 750, about 30 to about 750, about 35 to about 750, about 40 to about 750, about 45 to about 750, about 50 to about 750, about 55 to about 750, about 20 to about 700, about 25 to about 700, about 30 to about 700, about 35 to about 700, about 40 to about 700, about 45 to about 700, about 50 to about 700, about 55 to about 700, about 20 to about 650, about 25 to about 650, about 30 to about 650, about 35 to about 650, about 40 to about 650, about 45 to about 650, about 50 to about 650, about 55 to about 650, about 20 to about 600, about 25 to about 600, about 30 to about 600, about 35 to about 600, about 40 to about 600, about 45 to about 600, about 50 to about 600, about 55 to about 600, about 20 to about 550, about 25 to about 550, about 30 to about 550, about 35 to about 550, about 40 to about 550, about 45 to about 550, about 50 to about 550, about 55 to about 550, about 20 to about 540, about 25 to about 540, about 30 to about 540, about 35 to about 540, about 40 to about 540, about 45 to about 540, about 50 to about 540, about 55 to about 540, about 20 to about 530, about 25 to about 530, about 30 to about 530, about 35 to about 530, about 40 to about 530, about 45 to about 530, about 50 to about 530, about 55 to about 530, about 20 to about 520, about 25 to about 520, about 30 to about 520, about 35 to about 520, about 40 to about 520, about 45 to about 520, about 50 to about 520, about 55 to about 520, about 20 to about 510, about 25 to about 510, about 30 to about 510, about 35 to about 510, about 40 to about 510, about 45 to about 510, about 50 to about 510, about 55 to about 510, about 20 to about 505, about 25 to about 505, about 30 to about 505, about 35 to about 505, about 40 to about 505, about 45 to about 505, about 50 to about 505, about 55 to about 505, about 20 to about 500, about 25 to about 500, about 30 to about 500, about 35 to about 500, about 40 to about 500, about 45 to about 500, about 50 to about 500, about 55 to about 500, about 20 to about 495, about 25 to about 495, about 30 to about 495, about 35 to about 495, about 40 to about 495, about 45 to about 495, about 50 to about 495, about 55 to about 495, about 20 to about 490, about 25 to about 490, about 30 to about 490, about 35 to about 490, about 40 to about 490, about 45 to about 490, about 50 to about 490, about 55 to about 490.

### SODIUM SOURCE

As used herein, "sodium source" (sometimes referred to as component (b)) means a compound which generates sodium ions when the oral composition is put in the mouth.

Nonrestrictive examples of the sodium source include organic acid salts such as sodium malate, sodium citrate, sodium tartrate, sodium lactate, sodium alginate, sodium gluconate, and sodium ascorbate, inorganic salts such as sodium chloride, sodium sulfate, sodium phosphate, sodium carbonate, sodium disulfide, sodium bicarbonate, and sodium hydroxide, and amino acid salts such as sodium alginate, monosodium glutamate, monosodium aspartate, and sodium caseinate. Of these, sodium sources of organic acid salts and inorganic salts are preferable, and from viewpoints of costs and availability as oral composition raw materials, sodium chloride, sodium malate, sodium citrate, sodium carbonate, sodium bicarbonate, sodium tartrate, sodium lactate, sodium ascorbate, sodium gluconate and the like are more preferable.

The amount of sodium source contained in the oral composition of the present invention is less than 10 mM. In other embodiments of the present invention, an amount of the sodium source is about 9.5 mM or less, about 9.0 mM or less, about 8.5 mM or less, 8.0 mM or less, about 8.5 mM or less, about 7.0 mM or less, about 7.5 mM or less, about 6.0 mM or less, about 5.5 mM or less, about 5.0 mM or less, about 4.5 mM or less, about 4.0 mM or less, about 3.5 mM or less, about 2.0 mM or less, about 1.5 mM or less, about 1.0 mM or less, about 0.5 mM or less, about 9.5 mM or less, about 9.5 mM or less. In other embodiments, an amount of the sodium source can be in ranges from about 0.1 to about 9.9 mM, about 0.5 to about 9.9 mM, about 1.0 to about 9.9 mM, about 1.5 to about 9.9 mM, about 2.0 to about 9.9 mM, about 2.5 to about 9.9 mM, about 3.0 to about 9.9 mM, about 3.5 to about 9.9 mM, about 4.0 to about 9.9 mM, about 4.5 to about 9.9 mM, about 5.0 to about 9.9 mM, about 5.5 to about 9.9 mM, about 6.0 to about 9.9 mM, about 6.5 to about 9.9 mM, about 7.0 to about 9.9 mM, about 7.5 to about 9.9 mM, about 8.0 to about 9.9 mM, about 8.5 to about 9.9 mM, about 9.0 to about 9.9 mM, about 9.5 to about 9.9 mM, about 0.1 to about 9.5 mM, about 0.1 to about 9.0 mM, about 0.1 to about 8.5 mM, about 0.1 to about 8.0 mM, about 0.1 to about 7.5 mM, about 0.1 to about 7.0 mM, about 0.1 to about 6.5 mM, about 0.1 to about 6.0 mM, about 0.1 to about 5.5 mM, about 0.1 to about 5.0 mM, about 0.1 to about 4.5 mM, about 0.1 to about 4.0 mM, about 0.1 to about 3.5 mM, about 0.1 to about 3.0 mM, about 0.1 to about 2.5 mM, about 0.1 to about 2.0 mM, about 0.1 to about 1.5 mM, about 0.1 to about 1.0 mM, about 0.1 to about 0.5 mM, about 0.5 to about 9.5 mM, about 0.5 to about 9.5 mM, about 0.5 to about 9.0 mM, about 0.5 to about 8.5 mM, about 0.5 to about 8.0 mM, about 0.5 to about 7.5 mM, about 0.5 to about 7.0 mM, about 0.5 to about 6.5 mM, about 0.5 to about 6.0 mM, about 0.5 to about 5.5 mM, about 0.5 to about 5.0 mM, about 0.5 to about 4.5 mM, about 0.5 to about 4.0 mM, about 0.5 to about 3.5 mM, about 0.5 to about 3.0 mM, about 0.5 to about 2.5 mM, about 0.5 to about 2.0 mM, about 0.5 to about 1.5 mM, about 0.5 to about 1.0 mM, about 1.0 to about 9.5 mM, about 1.0 to about 9.0 mM, about 1.0 to about 8.5 mM, about 1.0 to about 8.0 mM, about 1.0 to about 7.5 mM, about 1.0 to about 7.0 mM, about 1.0 to about 6.5 mM, about 1.0 to about 6.0 mM, about 1.0 to about 5.5 mM, about 1.0 to about 5.0 mM, about 1.0 to about 4.5 mM, about 1.0 to about 4.0 mM, about 1.0 to about 3.5 mM, about 1.0 to about 3.0 mM, about 1.0 to about 2.5 mM, about 1.0 to about 2.0 mM, about 1.0 to about 1.5 mM, about 1.5 to about 9.5 mM, about 1.5 to about 9.0 mM, about 1.5 to about 8.5 mM, about 1.5 to about 8.0 mM, about 1.5 to about 7.5 mM, about 1.5 to about 7.0 mM, about 1.5 to about 6.5 mM, about 1.5 to about 6.0 mM, about 1.5 to about 5.5 mM, about 1.5 to about 5.0 mM, about 1.5 to about 4.5 mM, about 1.5 to about 4.0 mM, about 1.5 to about 3.5 mM, about 1.5 to about 3.0 mM, about 1.5 to about 2.5 mM, about 1.5 to about 2.0 mM, about 2.0 to about 9.5 mM, about 2.0 to about 9.0 mM, about 2.0 to about 8.5 mM, about 2.0 to about 8.0 mM, about 2.0 to about 7.5 mM, about 2.0 to about 7.0 mM, about 2.0 to about 6.5 mM, about 2.0 to about 6.0 mM, about 2.0 to about 5.5 mM, about 2.0 to about 5.0 mM, about 2.0 to about 4.5 mM, about 2.0 to about 4.0 mM, about 2.0 to about 3.5 mM, about 2.0 to about 3.0 mM, about 2.0 to about 2.5 mM, about 2.5 to about 9.5 mM, about 2.5 to about 9.0 mM, about 2.5 to about 8.5 mM, about 2.5 to about 8.0 mM, about 2.5 to about 7.5 mM, about 2.5 to about 7.0 mM, about 2.5 to about 6.5 mM, about 2.5 to about 6.0 mM, about 2.5 to about 5.5 mM, about 2.5 to about 5.0 mM, about 2.5 to about 4.5 mM, about 2.5 to about 4.0 mM, about 2.5 to about 3.5 mM, about 2.5 to about 3.0 mM, about 3.0 to about 9.5 mM, about 3.0 to about 9.0 mM, about 3.0 to about 8.5 mM, about 3.0 to about 8.0 mM, about 3.0 to about 7.5 mM, about 3.0 to about 7.0 mM, about 3.0 to about 6.5 mM, about 3.0 to about 6.0 mM, about 3.0 to about 5.5 mM, about 3.0 to about 5.0 mM, about 3.0 to about 4.5 mM, about 3.0 to about 4.0 mM, about 3.0 to about 3.5 mM, about 3.5 to about 9.5 mM, about 3.5 to about 9.0 mM, about 3.5 to about 8.5 mM, about 3.5 to about 8.0 mM, about 3.5 to about 7.5 mM, about 3.5 to about 7.0 mM, about 3.5 to about 6.5 mM, about 3.5 to about 6.0 mM, about 3.5 to about 5.5 mM, about 3.5 to about 5.0 mM, about 3.5 to about 4.5 mM, about 3.5 to about 4.0 mM, about 4.0 to about 9.5 mM, about 4.0 to about 9.0 mM, about 4.0 to about 8.5 mM, about 4.0 to about 8.0 mM, about 4.0 to about 7.5 mM, about 4.0 to about 7.0 mM, about 4.0 to about 6.5 mM, about 4.0 to about 6.0 mM, about 4.0 to about 5.5 mM, about 4.0 to about 5.0 mM, about 4.0 to about 4.5 mM, about 4.5 to about 9.5 mM, about 4.5 to about 9.0 mM, about 4.5 to about 8.5 mM, about 4.5 to about 8.0 mM, about 4.5 to about 7.5 mM, about 4.5 to about 7.0 mM, about 4.5 to about 6.5 mM, about 4.5 to about 6.0 mM, about 4.5 to about 5.5 mM, about 4.5 to about 5.0 mM, about 5.0 to about 9.5 mM, about 5.0 to about 9.0 mM, about 5.0 to about 8.5 mM, about 5.0 to about 8.0 mM, about 5.0 to about 7.5 mM, about 5.0 to about 7.0 mM, about 5.0 to about 6.5 mM, about 5.0 to about 6.0 mM, about 5.0 to about 5.5 mM, about 5.5 to about 9.5 mM, about 5.5 to about 9.0 mM, about 5.5 to about 8.5 mM, about 5.5 to about 8.0 mM, about 5.5 to about 7.5 mM, about 5.5 to about 7.0 mM, about 5.5 to about 6.5 mM, about 5.5 to about 6.0 mM, about 6.0 to about 9.5 mM, about 6.0 to about 9.0 mM, about 6.0 to about 8.5 mM, about 6.0 to about 8.0 mM, about 6.0 to about 7.5 mM, about 6.0 to about 7.0 mM, about 6.0 to about 6.5 mM, about 6.5 to about 9.5 mM, about 6.5 to about 9.0 mM, about 6.5 to about 8.5 mM, about 6.5 to about 8.0 mM, about 6.5 to about 7.5 mM, about 6.5 to about 7.0 mM, about 7.0 to about 9.5 mM, about 7.0 to about 9.0 mM, about 7.0 to about 8.5 mM, about 7.0 to about 8.0 mM, about 7.0 to about 7.5 mM.

An amount of sodium (sodium atom) Pb (mg/100 ml) can be in ranges from about 1 to about 23 mg/100 ml, about 2 to about 23 mg/100 ml, about 3 to about 23 mg/100 ml, about 4 to about 23 mg/100 ml, about 5 to about 23 mg/100 ml, about 6 to about 23 mg/100 ml, about 7 to about 23 mg/100 ml, about 8 to about 23 mg/100 ml, about 9 to about 23 mg/100 ml, about 10 to about 23 mg/100 ml, about 11 to about 23 mg/100 ml, about 12 to about 23 mg/100 ml, about 13 to about 23 mg/100 ml, about 14 to about 23 mg/100 ml, about 15 to about 23 mg/100 ml, about 16 to about 23 mg/100 ml, about 17 to about 23 mg/100 ml, about 8 to about 23 mg/100 ml, about 19 to about 23 mg/100 ml, about 20 to about 23 mg/100 ml, about 1 to about 22 mg/100 ml, about 1 to about 21 mg/100 ml, about 1 to about 20 mg/100 ml, about 1 to about 19 mg/100 ml, about 1 to about 18 mg/100 ml, about 1 to about 17 mg/100 ml, about 1 to about 16 mg/100 ml, about 1 to about 15 mg/100 ml, about 1 to about 14 mg/100 ml, about 1 to about 13 mg/100 ml, about 1 to about 12 mg/100 ml, about 1 to about 11 mg/100 ml, about 1 to about 10 mg/100 ml, about 1 to about 9 mg/100 ml, about 1 to about 8 mg/100 ml, about 1 to about 7 mg/100 ml, about 1 to about 6 mg/100 ml, about 1 to about 5 mg/100 ml, about 1 to about 4 mg/100 ml, about 1 to about 3 mg/100 ml, about 5 to about 10 mg/100 ml, about 5 to about 15 mg/100 ml, about 5 to about 20 mg/100 ml, about 10 to about 20 mg/100 ml, about 10 to about 15 mg/100 ml.

The amount of sodium contained in the oral composition can be measured by an atomic absorption spectrometry. Alternatively, the amount of sodium contained in the oral composition, when an amount of a sodium source contained is known, can be calculated from the contained amount.

### AMINO ACIDS OR DERIVATIVES OR SALTS THEREOF

The amino acids or amino acid salts used in the present invention are organic compounds having both functional groups of an amino group and a carboxyl group, or salts thereof, and are not particularly limited as long as a sweetness enhancement effect can be obtained. Additionally, proline and hydroxyproline, which form a cyclic structure in which the hydrogen of the amino group is substituted with a side chain moiety in a molecule, are also encompassed in the amino acids in the present description. The amino acid derivatives which can be used in the present invention encompass derivatives having no carboxyl group such as taurine.

The amino acids used in the present invention can be in the D-configuration, the L-configuration, or the racemic configuration consisting of the D-configuration and the L-configuration (in the present description, also referred to as the DL-amino acid). In embodiments of the present invention, the amino acid can be selected from neutral amino acids, basic amino acids, and acidic amino acids. Neutral amino acids can be preferably selected from glycine, alanine, valine, isoleucine, leucine and the like which have an alkyl group, serine, threonine and the like which have an OH group (a hydroxy group), tyrosine, phenylalanine, tryptophan and the like which have an aromatic group (or an aromatic ring), methionine, cysteine and the like which have a sulfur-containing group, and proline, hydroxyproline and the like which have an imino group, glutamine, asparagine and the like which have an amide group. Basic amino acids can be preferably selected from arginine, lysine, histidine and the like. Acidic amino acids can be preferably selected from glutamic acid, aspartic acid and the like. In preferable embodiments of the present invention, the amino acids are selected from the neutral amino acids or the basic amino acids. In further preferable embodiments of the present invention, the amino acids include amino acids selected from, of the basic amino acids or the neutral amino acids, amino acids having an alkyl group, an OH group, or an amide group on a side chain and combinations thereof. Of the neutral amino acids, examples of those having an alkyl group on a side chain include glycine, alanine, valine, isoleucine and leucine, those having an OH group on a side chain include serine and threonine, and those having an amide group on a side chain include glutamine and asparagine.

The amino acid contained in the oral composition in an embodiment of the present invention is one or more of the 22 amino acids forming proteins. Specific examples include the L-configuration of alanine (Ala), arginine (Arg), asparagine (Asn), aspartic acid (Asp), cysteine (Cys), glutamine (Gln), glutamic acid (Glu), glycine (Gly), histidine (His), isoleucine (Ile), leucine (Leu), lysine (Lys), methionine (Met), phenylalanine (Phe), proline (Pro), serine (Ser), threonine (Thr), tryptophan (Trp), tyrosine (Tyr), valine (Val), selenosysteine (Sec), and pyrrolysine (Pyl). Amino acid contained in an oral composition in embodiments of the present invention is one or more of the 22 amino acids forming proteins.

The amino acid contained in the oral composition in embodiments of the present invention is one or more selected from amino acids having a molecular weight of 70 to 260. Examples of such an amino acid include alanine (molecular weight: 89), arginine (molecular weight: 174), asparagine (molecular weight: 132), aspartic acid (molecular weight: 133), cysteine (molecular weight: 121), glutamine (molecular weight: 146), glutamic acid (molecular weight: 147), glycine (molecular weight: 75), histidine (molecular weight: 155), isoleucine (molecular weight: 131), leucine (molecular weight: 131), lysine (molecular weight: 146), methionine (molecular weight: 149), phenylalanine (molecular weight: 165), proline (molecular weight: 115), serine (molecular weight: 105), threonine (molecular weight: 119), tryptophan (molecular weight: 204), tyrosine (molecular weight: 181), valine (molecular weight: 117), selenosysteine (molecular weight: 168) and pyrrolysine (molecular weight: 255). In a preferable embodiment of the present invention, the amino acid is one or more selected from amino acids having molecular weights of 75 to 204, more preferably one or more selected from amino acids having molecular weights of 75 to 174, and further preferably one or more selected from amino acids having molecular weights of 75 to 146.

Preferably, the amino acid or a salt thereof is one or more selected from L-asparagine, L-aspartic acid, monosodium L-aspartate, DL-alanine, L-alanine, L-alanine solution, L-arginine, L-arginine L-glutamate, L-glutamine, L-cysteine, L-cysteine monohydrochloride, L-serine, L-tyrosine, L-glutamic acid, monoammonium L-glutamate, monopotassium L-glutamate, monocalcium Di-L-glutamate, monosodium L-glutamate (also known as sodium glutamate), monomagnesium Di-L-glutamate, glycine, L-histidine, L-histidine monohydrochloride, L-hydroxyproline, L-isoleucine, L-lysine, L-lysine solution, L-lysine L-aspartate, L-lysine hydrochloride (L-lysine monohydrochloride), L-lysine L-glutamate, L-leucine, DL-methionine, L-methionine, L-phenylalanine, L-proline, L-proline solution, DL-threonine, L-threonine, DL-tryptophan, L-tryptophan, and L-valine, L-theanine, L-ornithine, and taurine. In an embodiment of the present invention, a plurality species of amino acids can be used in combination. In an embodiment of the present invention, the amino acid includes an amino acid selected from glycine, alanine, valine, isoleucine, leucine, serine, threonine, glutamine, asparagine, arginine, lysine, histidine, and a combination thereof.

As used herein, the threshold of amino acids means a detection threshold or a taste recognition threshold. The detection threshold means a minimum concentration at which the difference from water can be clearly identified but a type of the taste (for example, bitterness, sourness, and sweetness) does not have to be always recognized; the taste recognition threshold means a minimum concentration at which a taste can be recognized (for example, Eur J Clin Nutr (2004) 58, 629-636). The threshold (detection threshold) of amino acids is organized by Susan S. Schiffman et al. in "Comparison of Taste Qualities and Thresholds of D- and L-Amino Acids", Physiology & Behavior, Vol. 27, pp. 51-59 (1981). For example, the detection threshold of each amino acid is as follows: glycine (30.9 mM), L-threonine (25.7 mM), L-serine (20.9 mM), L-alanine (16.2 mM), L-proline (15.1 mM), L-glutamine (9.77 mM), L-isoleucine (7.41 mM), L-phenylalanine (6.61 mM), L-leucine (6.45 mM), L-valine (4.16 mM), L-methionine (3.72 mM), L-tryptophan (2.29 mM), L-asparagine (1.62 mM), L-histidine (1.23 mM), L-arginine (1.20 mM), L-lysine (0.708 mM), L-aspartic acid (0.182 mM), L-glutamic acid (0.063 mM), L-cysteine (0.063 mM). Additionally, the taste recognition threshold is known to be about 1.5 to 2 times the detection threshold (Yuki Yamauchi et al., "WHOLE MOUTH GUSTATORY TEST (PART 1) - BASIC CONSIDERATIONS AND PRINCIPAL COMPONENT ANALYSIS", Journal of The Oto-Rhino-Laryngological Society of Japan, vol. 98 (1995) No. 1, p.119-129, and Reiko Ohmori, "Comparisons of the taste sensitivity between three generations", Bulletin of the Faculty of Education, Utsunomiya University, Section 1 (2013) Vol. 63 p.201-210)).

In the present invention, it is preferable that a measured value be used as the taste recognition threshold of an amino acid. A taste recognition threshold of an amino acid can be determined by preparing amino acid-containing aqueous solutions in several concentration levels and tasting in the order from low concentrations to high concentrations to carry out a sensory test by which the taste can be sensed or not. A concentration at which a difference from water is detected is defined as a detection threshold and a concentration at which a taste is recognized is defined as a recognition threshold. For example, for an amino acid for which a theoretical value (a literature value) is already established, aqueous solutions in several concentration levels close to such a concentration are prepared and several persons who received sensory trainings carry out the test thereby to determine these thresholds. In the case of L-alanine, a detection threshold described in literatures is 16.2 mM and a theoretical recognition threshold calculated from such a detection threshold is 32.4 mM, and a sensory test using aqueous solutions in several levels selected from 5 mM, 10 mM, 15 mM, 20 mM, 25 mM, 30 mM, and 35 mM is carried out thereby to measure a recognition threshold.

In embodiments of the present invention, the oral composition contains glycine and a content of glycine can be more than 0 mM and 80 mM or less, 75 mM or less, 70 mM or less, 65 mM or less, 60 mM or less, 55 mM or less, 50 mM or less, 45 mM or less, 40 mM or less, 35 mM or less, 30 mM or less, 25 mM or less, 20 mM or less, 15 mM or less, or 10 mM or less. Alternatively, such a content can be 10 mM to 80 mM, 20 mM to 80 mM, 30 mM to 80 mM, 40 mM to 80 mM, 50 mM to 80 mM, 60 mM to 80 mM, 70 mM to 80 mM, 10 mM to 70 mM, 20 mM to 70 mM, 30 mM to 70 mM, 40 mM to 70 mM, 50 mM to 70 mM, 60 mM to 70 mM, 10 mM to 60 mM, 20 mM to 60 mM, 30 mM to 60 mM, 40 mM to 60 mM, 50 mM to 60 mM, 10 mM to 50 mM, 20 mM to 50 mM, 30 mM to 50 mM, 40 mM to 50 mM, 10 mM to 40 mM, 20 mM to 40 mM, 30 mM to 40 mM, 10 mM to 30 mM, 20 mM to 30 mM.

In embodiments of the present invention, the oral composition contains alanine and a content of alanine can be more than 0 mM and 32.4 mM or less, 30 mM or less, 25 mM or less, 20 mM or less, 15 mM or less, or 10 mM or less. Alternatively, such a content can be 1 mM to 30 mM, 5 mM to 30 mM, 10 mM to 30 mM, 15 mM to 30 mM, 20 mM to 30 mM, 25 mM to 30 mM, 1 mM to 25 mM, 5 mM to 25 mM, 10 mM to 25 mM, 15 mM to 25 mM, 20 mM to 25 mM, 1 mM to 20 mM, 5 mM to 20 mM, 10 mM to 20 mM, 15 mM to 20 mM, 1 mM to 19 mM, 5 mM to 19 mM, 10 mM to 19 mM, 15 mM to 19 mM, 1 mM to 18 mM, 5 mM to 18 mM, 10 mM to 18 mM, 15 mM to 18 mM, 1 mM to 17 mM, 5 mM to 17 mM, 10 mM to 17 mM, 15 mM to 17 mM, 1 mM to 16 mM, 5 mM to 16 mM, 10 mM to 16 mM, 15 mM to 16 mM. Alanine can be either the L-configuration, the D-configuration, or the racemic configuration (DL-configuration) but is preferably the L-configuration.

In embodiments of the present invention, the oral composition contains valine and a content of valine can be more than 0 mM and 50 mM or less, 45 mM or less, 40 mM or less, 35 mM or less, 30 mM or less, 25 mM or less, 20 mM or less, 15 mM or less, or 10 mM or less. Alternatively, such a content can be 1 mM to 50 mM, 5 mM to 50 mM, 10 mM to 50 mM, 15 mM to 50 mM, 20 mM to 50 mM, 25 mM to 50 mM, 1 mM to 50 mM, 5 mM to 50 mM, 10 mM to 50 mM, 15 mM to 50 mM, 20 mM to 50 mM, 25 mM to 50 mM, 30 mM to 50 mM, 35 mM to 50 mM, 40 mM to 50 mM, 45 mM to 50 mM, 1 mM to 45 mM, 5 mM to 45 mM, 10 mM to 45 mM, 15 mM to 45 mM, 20 mM to 45 mM, 25 mM to 45 mM, 1 mM to 45 mM, 5 mM to 45 mM, 10 mM to 45 mM, 15 mM to 45 mM, 20 mM to 45 mM, 25 mM to 45 mM, 30 mM to 45 mM, 35 mM to 45 mM, 40 mM to 45 mM, 1 mM to 40 mM, 5 mM to 40 mM, 10 mM to 40 mM, 15 mM to 40 mM, 20 mM to 40 mM, 25 mM to 40 mM, 1 mM to 40 mM, 5 mM to 40 mM, 10 mM to 40 mM, 15 mM to 40 mM, 20 mM to 40 mM, 25 mM to 40 mM, 30 mM to 40 mM, 35 mM to 40 mM, 1 mM to 40 mM, 5 mM to 40 mM, 10 mM to 40 mM, 15 mM to 40 mM, 20 mM to 40 mM, 25 mM to 40 mM, 1 mM to 35 mM, 5 mM to 35 mM, 10 mM to 35 mM, 15 mM to 35 mM, 20 mM to 35 mM, 25 mM to 35 mM, 30 mM to 35 mM, 1 mM to 30 mM, 5 mM to 30 mM, 10 mM to 30 mM, 15 mM to 30 mM, 20 mM to 30 mM, 25 mM to 30 mM, 1 mM to 25 mM, 5 mM to 25 mM, 10 mM to 25 mM, 15 mM to 25 mM, 20 mM to 25 mM, 1 mM to 20 mM, 5 mM to 20 mM, 10 mM to 20 mM, 15 mM to 20 mM. Valine can be either the L-configuration, the D-configuration, or the racemic configuration (DL-configuration) but is preferably the L-configuration.

In embodiments of the present invention, the oral composition contains isoleucine and a content of isoleucine can be more than 0 mM and 25 mM or less, 20 mM or less, 15 mM or less, 10 mM or less, or 5 mM or less. Alternatively, such a content can be 1 mM to 25 mM, 5 mM to 25 mM, 10 mM to 25 mM, 15 mM to 25 mM, 20 mM to 25 mM, 1 mM to 20 mM, 5 mM to 20 mM, 10 mM to 20 mM, 15 mM to 20 mM, 1 mM to 15 mM, 5 mM to 15 mM, 10 mM to 15 mM. Isoleucine can be either the L-configuration, the D-configuration, or the racemic configuration (DL-configuration) but is preferably the L-configuration.

In embodiments of the present invention, the oral composition contains leucine and a content of leucine can be more than 0 mM and 15 mM or less, 13 mM or less, 12 mM or less, 11 mM or less, 10 mM or less, 9 mM or less, 8 mM or less, 7 mM or less, 6 mM or less, 5 mM or less, 4 mM or less, 3 mM or less, 2 mM or less, or 1 mM or less. Alternatively, such a content can be 1 mM to 15 mM, 2 mM to 15 mM, 3 mM to 15 mM, 4 mM to 15 mM, 5 mM to 15 mM, 6 mM to 15 mM, 7 mM to 15 mM, 8 mM to 15 mM, 9 mM to 15 mM, 10 mM to 15 mM, 1 mM to 12 mM, 2 mM to 12 mM, 3 mM to 12 mM, 4 mM to 12 mM, 5 mM to 12 mM, 6 mM to 12 mM, 7 mM to 12 mM, 8 mM to 12 mM, 9 mM to 12 mM, 10 mM to 12 mM, 1 mM to 10 mM, 2 mM to 10 mM, 3 mM to 10 mM, 4 mM to 10 mM, 5 mM to 10 mM, 6 mM to 10 mM, 7 mM to 10 mM, 8 mM to 10 mM, 9 mM to 10 mM. Leucine can be either the L-configuration, the D-configuration, or the racemic configuration (DL-configuration) but is preferably the L-configuration.

In embodiments of the present invention, the oral composition contains leucine and a content of leucine can be more than 0 mM and 50 mM or less, 45 mM or less, 40 mM or less, 35 mM or less, 30 mM or less, 25 mM or less, or 20 mM or less. Alternatively, such a content can be 1 mM to 50 mM, 2 mM to 50 mM, 3 mM to 50 mM, 4 mM to 50 mM, 5 mM to 50 mM, 6 mM to 50 mM, 7 mM to 50 mM, 8 mM to 50 mM, 9 mM to 50 mM, 10 mM to 50 mM, 1 mM to 40 mM, 2 mM to 40 mM, 3 mM to 40 mM, 4 mM to 40 mM, 5 mM to 40 mM, 6 mM to 40 mM, 7 mM to 40 mM, 8 mM to 40 mM, 9 mM to 40 mM, 10 mM to 40 mM, 1 mM to 30 mM, 2 mM to 30 mM, 3 mM to 30 mM, 4 mM to 30 mM, 5 mM to 30 mM, 6 mM to 30 mM, 7 mM to 30 mM, 8 mM to 30 mM, 9 mM to 30 mM, 1 mM to 20 mM, 2 mM to 20 mM, 3 mM to 20 mM, 4 mM to 20 mM, 5 mM to 20 mM, 6 mM to 20 mM, 7 mM to 20 mM, 8 mM to 20 mM, 9 mM to 20 mM, 15 mM to 50 mM, 15 mM to 45 mM, 15 mM to 40 mM, 15 mM to 35 mM, 15 mM to 30 mM, 15 mM to 25 mM, 15 mM to 20 mM. Leucine can be either the L-configuration, the D-configuration, or the racemic configuration (DL-configuration) but is preferably the L-configuration.

In embodiments of the present invention, the oral composition contains serine and a content of serine can be more than 0 mM and 130 mM or less, 100 mM or less, 80 mM or less, 50 mM or less, 45 mM or less, 40 mM or less, 35 mM or less, 30 mM or less, 25 mM or less, 20 mM or less, 15 mM or less, or 10 mM or less. Alternatively, such a content can be 10 mM to 130 mM, 10 mM to 100 mM, 10 mM to 80 mM, 20 mM to 80 mM, 30 mM to 80 mM, 40 mM to 80 mM, 50 mM to 80 mM, 60 mM to 80 mM, 70 mM to 80 mM, 10 mM to 70 mM, 20 mM to 70 mM, 30 mM to 70 mM, 40 mM to 70 mM, 50 mM to 70 mM, 60 mM to 70 mM, 10 mM to 60 mM, 20 mM to 60 mM, 30 mM to 60 mM, 40 mM to 60 mM, 50 mM to 60 mM, 10 mM to 50 mM, 20 mM to 50 mM, 30 mM to 50 mM, 40 mM to 50 mM, 10 mM to 40 mM, 20 mM to 40 mM, 30 mM to 40 mM, 10 mM to 30 mM, 20 mM to 30 mM, 5 mM to 45 mM, 5 mM to 40 mM, 5 mM to 35 mM, 5 mM to 30 mM, 5 mM to 25 mM, 5 mM to 20 mM, 5 mM to 15 mM, 5 mM to 10 mM, 1 mM to 45 mM, 1 mM to 40 mM, 1 mM to 35 mM, 1 mM to 30 mM, 1 mM to 25 mM, 1 mM to 20 mM, 1 mM to 15 mM, 1 mM to 10 mM. Serine can be either the L-configuration, the D-configuration, or the racemic configuration (DL-configuration) but is preferably the L-configuration.

In embodiments of the present invention, the oral composition contains threonine and a content of threonine can be more than 0 mM and 70 mM or less, 65 mM or less, 60 mM or less, 55 mM or less, 50 mM or less, 45 mM or less, 40 mM or less, 35 mM or less, 30 mM or less, 25 mM or less, 20 mM or less, 15 mM or less, or 10 mM or less. Alternatively, such a content can be 1 mM to 70 mM, 1 mM to 65 mM, 1 mM to 60 mM, 1 mM to 55 mM, 1 mM to 50 mM, 5 mM to 50 mM, 10 mM to 50 mM, 15 mM to 50 mM, 20 mM to 50 mM, 25 mM to 50 mM, 1 mM to 50 mM, 5 mM to 50 mM, 10 mM to 50 mM, 15 mM to 50 mM, 20 mM to 50 mM, 25 mM to 50 mM, 30 mM to 50 mM, 35 mM to 50 mM, 40 mM to 50 mM, 45 mM to 50 mM, 1 mM to 45 mM, 5 mM to 45 mM, 10 mM to 45 mM, 15 mM to 45 mM, 20 mM to 45 mM, 25 mM to 45 mM, 1 mM to 45 mM, 5 mM to 45 mM, 10 mM to 45 mM, 15 mM to 45 mM, 20 mM to 45 mM, 25 mM to 45 mM, 30 mM to 45 mM, 35 mM to 45 mM, 40 mM to 45 mM, 1 mM to 40 mM, 5 mM to 40 mM, 10 mM to 40 mM, 15 mM to 40 mM, 20 mM to 40 mM, 25 mM to 40 mM, 1 mM to 40 mM, 5 mM to 40 mM, 10 mM to 40 mM, 15 mM to 40 mM, 20 mM to 40 mM, 25 mM to 40 mM, 30 mM to 40 mM, 35 mM to 40 mM, 1 mM to 40 mM, 5 mM to 40 mM, 10 mM to 40 mM, 15 mM to 40 mM, 20 mM to 40 mM, 25 mM to 40 mM, 1 mM to 35 mM, 5 mM to 35 mM, 10 mM to 35 mM, 15 mM to 35 mM, 20 mM to 35 mM, 25 mM to 35 mM, 30 mM to 35 mM, 1 mM to 30 mM, 5 mM to 30 mM, 10 mM to 30 mM, 15 mM to 30 mM, 20 mM to 30 mM, 25 mM to 30 mM, 1 mM to 25 mM, 5 mM to 25 mM, 10 mM to 25 mM, 15 mM to 25 mM, 20 mM to 25 mM, 1 mM to 20 mM, 5 mM to 20 mM, 10 mM to 20 mM, 15 mM to 20 mM. Threonine can be either the L-configuration, the D-configuration, or the racemic configuration (DL-configuration) but is preferably the L-configuration.

In embodiments of the present invention, the oral composition contains phenylalanine and a content of phenylalanine can be more than 0 mM and 15 mM or less, 13 mM or less, 12 mM or less, 11 mM or less, 10 mM or less, 9 mM or less, 8 mM or less, 7 mM or less, 6 mM or less, 5 mM or less, 4 mM or less, 3 mM or less, 2 mM or less, or 1 mM or less. Alternatively, such a content can be 1 mM to 15 mM, 2 mM to 15 mM, 3 mM to 15 mM, 4 mM to 15 mM, 5 mM to 15 mM, 6 mM to 15 mM, 7 mM to 15 mM, 8 mM to 15 mM, 9 mM to 15 mM, 10 mM to 15 mM, 1 mM to 12 mM, 2 mM to 12 mM, 3 mM to 12 mM, 4 mM to 12 mM, 5 mM to 12 mM, 6 mM to 12 mM, 7 mM to 12 mM, 8 mM to 12 mM, 9 mM to 12 mM, 10 mM to 12 mM, 1 mM to 10 mM, 2 mM to 10 mM, 3 mM to 10 mM, 4 mM to 10 mM, 5 mM to 10 mM, 6 mM to 10 mM, 7 mM to 10 mM, 8 mM to 10 mM, 9 mM to 10 mM. Phenylalanine can be either the L-configuration, the D-configuration, or the racemic configuration (DL-configuration) but is preferably the L-configuration.

In embodiments of the present invention, the oral composition contains tryptophan and a content of tryptophan can be more than 0 mM and 5 mM or less, 4 mM or less, 3 mM or less, 2 mM or less, or 1 mM or less. Alternatively, such a content can be 1 mM to 5 mM, 2 mM to 5 mM, 3 mM to 5 mM, 4 mM to 5 mM. Tryptophan can be either the L-configuration, the D-configuration, or the racemic configuration (DL-configuration) but is preferably the L-configuration.

In embodiments of the present invention, the oral composition contains methionine and a content of methionine can be more than 0 mM and 10 mM or less, 9 mM or less, 8 mM or less, 7 mM or less, 6 mM or less, 5 mM or less, 4 mM or less, 3 mM or less, 2 mM or less, or 1 mM or less. Alternatively, such a content can be 1 mM to 10 mM, 2 mM to 10 mM, 3 mM to 10 mM, 4 mM to 10 mM, 5 mM to 10 mM, 6 mM to 10 mM, 7 mM to 10 mM, 8 mM to 10 mM, 9 mM to 10 mM. Methionine can be either the L-configuration, the D-configuration, or the racemic configuration (DL-configuration) but is preferably the L-configuration.

In embodiments of the present invention, the oral composition contains proline and a content of proline can be more than 0 mM and 120 mM or less, 100 mM or less, 80 mM or less, 50 mM or less, 45 mM or less, 40 mM or less, 35 mM or less, 30 mM or less, 25 mM or less, 20 mM or less, 15 mM or less, or 10 mM or less. Alternatively, such a content can be 10 mM to 120 mM, 10 mM to 100 mM, 10 mM to 80 mM, 20 mM to 80 mM, 30 mM to 80 mM, 40 mM to 80 mM, 50 mM to 80 mM, 60 mM to 80 mM, 70 mM to 80 mM, 10 mM to 70 mM, 20 mM to 70 mM, 30 mM to 70 mM, 40 mM to 70 mM, 50 mM to 70 mM, 60 mM to 70 mM, 10 mM to 60 mM, 20 mM to 60 mM, 30 mM to 60 mM, 40 mM to 60 mM, 50 mM to 60 mM, 10 mM to 50 mM, 20 mM to 50 mM, 30 mM to 50 mM, 40 mM to 50 mM, 10 mM to 40 mM, 20 mM to 40 mM, 30 mM to 40 mM, 1 mM to 30 mM, 5 mM to 30 mM, 10 mM to 30 mM, 15 mM to 30 mM, 20 mM to 30 mM, 25 mM to 30 mM. Proline can be either the L-configuration, the D-configuration, or the racemic configuration (DL-configuration) but is preferably the L-configuration.

In embodiments of the present invention, the oral composition contains glutamine and a content of glutamine can be more than 0 mM and 20 mM or less, 19 mM or less, 18 mM or less, 17 mM or less, 16 mM or less, 15 mM or less, 14 mM or less, 13 mM or less, 12 mM or less, 11 mM or less, 10 mM or less, 9 mM or less, 8 mM or less, 7 mM or less, 6 mM or less, 5 mM or less, 4 mM or less, 3 mM or less, 2 mM or less, or 1 mM or less. Alternatively, such a content can be 1 mM to 20 mM, 1 mM to 18 mM, 1 mM to 15 mM, 2 mM to 15 mM, 3 mM to 15 mM, 4 mM to 15 mM, 5 mM to 15 mM, 6 mM to 15 mM, 7 mM to 15 mM, 8 mM to 15 mM, 9 mM to 15 mM, 10 mM to 15 mM, 1 mM to 12 mM, 2 mM to 12 mM, 3 mM to 12 mM, 4 mM to 12 mM, 5 mM to 12 mM, 6 mM to 12 mM, 7 mM to 12 mM, 8 mM to 12 mM, 9 mM to 12 mM, 10 mM to 12 mM, 1 mM to 10 mM, 2 mM to 10 mM, 3 mM to 10 mM, 4 mM to 10 mM, 5 mM to 10 mM, 6 mM to 10 mM, 7 mM to 10 mM, 8 mM to 10 mM, 9 mM to 10 mM, 1 mM to 8 mM, 2 mM to 8 mM, 3 mM to 8 mM, 4 mM to 8 mM, 5 mM to 8 mM, 6 mM to 8 mM, 7 mM to 8 mM, 1 mM to 7 mM, 2 mM to 7 mM, 3 mM to 7 mM, 4 mM to 7 mM, 5 mM to 7 mM, 6 mM to 7 mM, 1 mM to 6 mM, 2 mM to 6 mM, 3 mM to 6 mM, 4 mM to 6 mM, 5 mM to 6 mM, 1 mM to 5 mM, 2 mM to 5 mM, 3 mM to 5 mM, 4 mM to 5 mM, 1 mM to 4 mM, 2 mM to 4 mM, 3 mM to 4 mM, 1 mM to 3 mM, 2 mM to 3 mM. Glutamine can be either the L-configuration, the D-configuration, or the racemic configuration (DL-configuration) but is preferably the L-configuration.

In embodiments of the present invention, the oral composition contains asparagine and a content of asparagine can be more than 0 mM and 20 mM or less, 19 mM or less, 18 mM or less, 17 mM or less, 16 mM or less, 15 mM or less, 14 mM or less, 13 mM or less, 12 mM or less, 11 mM or less, 10 mM or less, 9 mM or less, 8 mM or less, 7 mM or less, 6 mM or less, 5 mM or less, 4 mM or less, 5 mM or less, 2 mM or less, or 1 mM or less. Alternatively, such a content can be 1 mM to 20 mM, 1 mM to 18 mM, 1 mM to 15 mM, 2 mM to 15 mM, 3 mM to 15 mM, 4 mM to 15 mM, 5 mM to 15 mM, 6 mM to 15 mM, 7 mM to 15 mM, 8 mM to 15 mM, 9 mM to 15 mM, 10 mM to 15 mM, 1 mM to 12 mM, 2 mM to 12 mM, 3 mM to 12 mM, 4 mM to 12 mM, 5 mM to 12 mM, 6 mM to 12 mM, 7 mM to 12 mM, 8 mM to 12 mM, 9 mM to 12 mM, 10 mM to 12 mM, 1 mM to 10 mM, 2 mM to 10 mM, 3 mM to 10 mM, 4 mM to 10 mM, 5 mM to 10 mM, 6 mM to 10 mM, 7 mM to 10 mM, 8 mM to 10 mM, 9 mM to 10 mM, 0.1 mM to 3.0 mM, 0.1 mM to 2.5 mM, 0.1 mM to 2.0 mM, 0.1 mM to 1.5 mM, 0.1 mM to 1.0 mM, 0. 1 mM to 0.5 mM, 0.5 mM to 3.0 mM, 0.5 mM to 2.5 mM, 0.5 mM to 2.0 mM, 0.5 mM to 1.5 mM, 0.5 mM to 10 mM. Asparagine can be either the L-configuration, the D-configuration, or the racemic configuration (DL-configuration) but is preferably the L-configuration.

In embodiments of the present invention, the oral composition contains arginine and a content of arginine can be more than 0 mM and 4.0 mM or less, 3.5 mM or less, 3.0 mM or less, 2.5 mM or less, 2.0 mM or less, 1.5 mM or less, 10 mM or less, or 0.5 mM or less. Alternatively, such a content can be 0.1 mM to 4.0 mM, 0.1 mM to 3.5 mM, 0.1 mM to 3.0 mM, 0.1 mM to 2.5 mM, 0.1 mM to 2.0 mM, 0.1 mM to 1.5 mM, 0.1 mM to 1.0 mM, 0.1 mM to 0.5 mM, 0.5 mM to 4.0 mM, 0.5 mM to 3.5 mM, 0.5 mM to 3.0 mM, 0.5 mM to 2.5 mM, 0.5 mM to 2.0 mM, 0.5 mM to 1.5 mM, 0.5 mM to 1.0 mM. Arginine can be either the L-configuration, the D-configuration, or the racemic configuration (DL-configuration) but is preferably the L-configuration.

In embodiments of the present invention, the oral composition contains lysine and a content of lysine can be more than 0 mM and 3.0 mM or less, 2. 5 mM or less, 2.0 mM or less, 1.5 mM or less, 10 mM or less, or 0.5 mM or less. Alternatively, such a content can be 0.1 mM to 3.0 mM, 0.1 mM to 2.5 mM, 0.1 mM to 2.0 mM, 0.1 mM to 1.5 mM, 0.1 mM to 1.0 mM, 0.1 mM to 0.5 mM, 0.5 mM to 3.0 mM, 0.5 mM to 2.5 mM, 0.5 mM to 2.0 mM, 0.5 mM to 1.5 mM, 0.5 mM to 1.0 mM. Lysine can be either the L-configuration, the D-configuration, or the racemic configuration (DL-configuration) but is preferably the L-configuration.

In embodiments of the present invention, the oral composition contains lysine hydrochloride and a content of lysine hydrochloride can be more than 0 mM and 1.0 mM or less, 0.9 mM or less, 0.8 mM or less, 0.7 mM or less, 0.6 mM or less, 0.5 mM or less, 0.4 mM or less, 0.3 mM or less, or 0.2 mM or less. Alternatively, such a content can be 0.1 mM to 1.0 mM, 0.1 mM to 0.9 mM, 0.1 mM to 0.8 mM, 0.1 mM to 0.7 mM, 0.1 mM to 0.6 mM, 0.1 mM to 0.5 mM, 0.1 mM to 0.4 mM, 0.1 mM to 0.3 mM, 0.1 mM to 0.2 mM, 0.2 mM to 1.0 mM, 0.5 mM to 0.8 mM, 0. 2 mM to 0.6 mM, 0.2 mM to 0.4 mM, 0.3 mM to 0.5 mM. Lysine can be either the L-configuration, the D-configuration, or the racemic configuration (DL-configuration) but is preferably the L-configuration.

In embodiments of the present invention, the oral composition contains histidine and a content of histidine can be more than 0 mM and 4.0 mM or less, 3.5 mM or less, 3.0 mM or less, 2.5 mM or less, 2.0 mM or less, 1.5 mM or less, 1.0 mM or less, or 0.5 mM or less. Alternatively, such a content can be 0.1 mM to 4.0 mM, 0.1 mM to 3.5 mM, 0.1 mM to 3.0 mM, 0.1 mM to 2.5 mM, 0.1 mM to 2.0 mM, 0.1 mM to 1.5 mM, 0.1 mM to 1.0 mM, 0.1 mM to 0.5 mM, 0.5 mM to 4.0 mM, 0.5 mM to 3.5 mM, 0.5 mM to 3.0 mM, 0.5 mM to 2.5 mM, 0.5 mM to 2.0 mM, 0.5 mM to 1.5 mM, 0.5 mM to 1.0 mM. Histidine can be either the L-configuration, the D-configuration, or the racemic configuration (DL-configuration) but is preferably the L-configuration.

In embodiments of the present invention, the oral composition contains glutamic acid and a content of glutamic acid can be more than 0 mM and 0.40 mM or less, 0.35 mM or less, 0.30 mM or less, 0.25 mM or less, 0.20 mM or less, 0.15 mM or less, 0.14 mM or less, 0.13 mM or less, 0.12 mM or less, 0.11 mM or less, 0.10 mM or less, 0.09 mM or less, 0.08 mM or less, 0.07 mM or less, 0.06 mM or less, 0.05 mM or less, 0.04 mM or less, 0.03 mM or less, 0.02 mM or less, or 0.01 mM or less. Alternatively, such a content can be 0.01 mM to 0.15 mM, 0.02 mM to 0.15 mM, 0.03 mM to 0.15 mM, 0.04 mM to 0.15 mM, 0.05 mM to 0.15 mM, 0.06 mM to 0.15 mM, 0.07 mM to 0.15 mM, 0.08 mM to 0.15 mM, 0.09 mM to 0.15 mM, 0.10 mM to 0.15 mM, 0.01 mM to 0.12 mM, 0.02 mM to 0.12 mM, 0.03 mM to 0.12 mM, 0.04 mM to 0.12 mM, 0.05 mM to 0.12 mM, 0.06 mM to 0.12 mM, 0.07 mM to 0.12 mM, 0.08 mM to 0.12 mM, 0.09 mM to 0.12 mM, 0.10 mM to 0.12 mM, 0.01 mM to 0.10 mM, 0.02 mM to 0.10 mM, 0.03 mM to 0.10 mM, 0.04 mM to 0.10 mM, 0.05 mM to 0.10 mM, 0.06 mM to 0.10 mM, 0.07 mM to 0.10 mM, 0.08 mM to 0.10 mM, 0.09 mM to 0.10 mM, 0.10 mM to 0.40 mM, 0.10 mM to 0.35 mM, 0.10 mM to 0.30 mM, 0.10 mM to 0.25 mM, 0.10 mM to 0.20 mM, 0.10 mM to 0.15 mM, 0.20 mM to 0.40 mM, 0.20 mM to 0.35 mM, 0.20 mM to 0.30 mM, 0.20 mM to 0.25 mM, 0.30 mM to 0.40 mM. Glutamic acid can be either the L-configuration, the D-configuration, or the racemic configuration (DL-configuration) but is preferably the L-configuration.

In embodiments of the present invention, the oral composition contains aspartic acid and a content of aspartic acid can be more than 0 mM and 1.5 mM or less, 1.4 mM or less, 1.3 mM or less, 1.2 mM or less, 1.1 mM or less, 1.0 mM or less, 0.9 mM or less, 0.8 mM or less, 0.7 mM or less, 0.6 mM or less, 0.5 mM or less, 0.4 mM or less, 0.3 mM or less, 0.2 mM or less, or 0.1 mM or less. Alternatively, such a content can be 0.1 mM to 1.5 mM, 0.2 mM to 1.5 mM, 0.3 mM to 1.5 mM, 0.4 mM to 1.5 mM, 0.5 mM to 1.5 mM, 0.6 mM to 1.5 mM, 0.7 mM to 1.5 mM, 0.8 mM to 1.5 mM, 0.9 mM to 1.5 mM, 1.0 mM to 1.5 mM, 0.1 mM to 1.2 mM, 0.2 mM to 1.2 mM, 0.3 mM to 1.2 mM, 0.4 mM to 1.2 mM, 0.5 mM to 1.2 mM, 0.6 mM to 1.2 mM, 0.7 mM to 1.2 mM, 0.8 mM to 1.2 mM, 0.9 mM to 1.2 mM, 1.0 mM to 1.2 mM, 0.1 mM to 1.0 mM, 0.2 mM to 1.0 mM, 0.3 mM to 1.0 mM, 0.4 mM to 1.0 mM, 0.5 mM to 1.0 mM, 0.6 mM to 1.0 mM, 0.7 mM to 1.0 mM, 0.8 mM to 1.0 mM, 0.9 mM to 1.0 mM. Aspartic acid can be either the L-configuration, the D-configuration, or the racemic configuration (DL-configuration) but is preferably the L-configuration.

In embodiments of the present invention, the oral composition does not contain monosodium aspartate as the amino acid salt.

### OPTIONAL COMPONENTS

### Sweeteners

The oral composition of the present invention can contain a sweetener other than the high-intensity sweetener having a good taste quality of the component (a). In the present description, "sweetener" means any substance or substance group which causes a sweetness response. Sweeteners can be classified into carbohydrate sweeteners and non-carbohydrate sweeteners based on structural characteristics and also into low-intensity sweeteners and high-intensity sweeteners based on the degree of sweetness. Further, sweet substances can also be classified based on the energy (calorie) into caloric sweeteners and non-caloric sweeteners. Note that, of the sweeteners below, those also classified into the high-intensity sweetener having a good taste quality are included in component (a).

The carbohydrate sweetener is not limited and include starch sugars such as sucrose, lactose, glucose, maltose, starch syrup, a high-fructose corn syrup, and fructose, sugar alcohols such as erythritol, sorbitol, mannitol, maltitol, xylitol, and palatinit, sucrose, palatinose, fructooligosaccharides, Coupling Sugar^{(R)}, lactose, galactooligosaccharides, lactosucrose, raffinose, soyoligosaccharide, and honey. Further, the carbohydrate-based sweetener includes rare sugars.

Rare sugar refers to a monosaccharide that occurs in very small quantities in nature and derivatives thereof. For example, the rare sugar includes naturally occurring aldoses other than D-glucose, D-galactose, D-mannose, D-ribose, D-xylose, and L-arabinose, naturally occurring ketoses other than D-fructose, naturally occurring sugar alcohols other than D-sorbitol. Nonrestrictive examples of the rare sugar include ketoses such as D-tagatose, D-sorbose, D-allulose (D-psicose), L-fructose, L-allulose (L-psicose), L-tagatose, L-sorbose, aldoses such as altrose and D-allose, sugar alcohols such as xylitol, erythritol, and D-talitol.

The non-carbohydrate sweetener is not limited and includes steviol glycoside, glycyrrhizin, monellin, thaumatin, aspartame, saccharine, saccharin sodium, disodium glycyrrhizin, trisodium glycyrrhizin, acesulfame K, neohesperidin dihydrochalcone, and sucralose.

Low-intensity sweetener means a compound having about the same degree of sweetness as that of sucrose (for example, about 0.1 to 2 times, about 0.5 to 1.5 times that of sucrose). Nonrestrictive examples of the low-intensity sweetener include low-intensity sugar sweeteners such as sucrose, a high-fructose corn syrup, glucose, fructose, lactose, maltose, xylose, lactulose, fructooligosaccharides, maltooligosaccharides, isomaltooligosaccharides, galactooligosaccharides, Coupling Sugar^{(R)}, and palatinose, sugar alcohol low-intensity sweeteners such as maltitol, sorbitol, erythritol, xylitol, lactitol, palatinit, reduced starch saccharified products. Further, the low-intensity sweetener includes rare sugars.

High-intensity sweetener means a compound having a more intense sweetness than sucrose and encompasses naturally occurring compounds, synthetic compounds, and combinations of naturally occurring compounds and synthetic compounds. The high-intensity sweetener has, in the same amount as sucrose, a sweetness 5 times or more, 10 times or more, 50 times or more, 100 times or more, 500 times or more, 1000 times or more, 5000 times or more, 10000 times or more, 50000 times or more, and 100000 times or more, of that of sucrose.

Specific examples of high-intensity sweeteners include peptide-based sweeteners such as aspartame, neotame, and advantame, for example, sucrose derivatives such as sucralose, for example, synthetic sweeteners such as acesulfame K, saccharine, saccharin sodium, sodium cyclamate, dulcin, disodium glycyrrhizin, trisodium glycyrrhizin, and neohesperidin dihydrochalcone (including those naturally occurring but also those whose synthetic products are mostly distributed such as neohesperidin dihydrochalcone), for example, sweeteners extracted from plants such as thaumatin, monellin, curculin, mabinlin, brazzein, pentagin, hernandulcin, 4β-hydroxyhernandulcin, miraculin, glycyrrhizin, rubusoside, and phyllodulcin, and plant extracts containing a high-intensity sweetener component, for example, Stevia rebaudiana extract, Luo han guo extract, Glycyrrhiza glabra extract, Rubus suavissimus S. Lee extract, Hydrangea macrophylla var. thunbergii extract, Sclerochiton ilicifolius extract, Thaumataococcus daniellii Benth extract, Dioscoreophyllum volkensii (serendipity berry) extract, Curculigo latifolia extract, Richadella dulcifica (miracle fruit) extract, Pentadiplandra brazzeana (West African fruit) extract, Capparis masaikai (Mabinlang) extract, Lippia dulcis (Aztec sweet herb) extract, sweet components in these extracts, for example, steviol glycosides such as stevia derivatives like enzymatically-treated stevia in which a stevia extract and stevia are treated with an enzyme and glucose is added thereto, mogrosides obtained by treating Luo han guo and a Luo han guo extract, glycosides obtained from plant extracts such as phyllodulcin glycosides, Glycyrrhiza glabra plant-containing sweet components (for example, triterpene glycosides such as glycyrrhizin), Rubus suavissimus S. Lee plant-containing sweet components (for example, diterpene glycosides such as rubusoside), Hydrangea macrophylla var. thunbergii plant-containing sweet components (for example, dihydroisocoumarin such as phyllodulcin), Sclerochiton ilicifolius plant-containing sweet components (for example, amino acids such as monatin), Thaumataococcus daniellii Benth plant-containing sweet components (for example, proteins such as thaumatin), Dioscoreophyllum volkensii plant-containing sweet components (for example, proteins such as monellin), Curculigo latifolia plant-containing sweet components (for example, proteins such as curculin), Richadella dulcifica plant-containing sweet components (for example, proteins such as miraculin), Pentadiplandra brazzeana plant-containing sweet components (for example, proteins such as brazzein and pentagin), Capparis masaikai plant-containing sweet components (for example, proteins such as mabinlin), and Lippia dulcis plant-containing sweet components (for example, sesquiterpenes such as hernandulcin and 4β-hydroxyhernandulcin) .

Examples of the steviol glycoside include stevioside, rebaudioside A (hereinafter, rebaudioside may be abbreviated as Reb), RebB, RebC, RebD, RebM, RebN, RebO, Dulcoside A, and rubusoside. Examples of the mogroside include mogroside IV and mogroside V.

The Glycyrrhiza extract refers to those obtained from roots or rhizomes of Glycyrrhiza uralensis Fisher, Glycyrrhiza inflata Batalin, and Glycyrrhiza glabra Linne and having glycyrrhizic acid as the main component. Examples of the Glycyrrhiza extract include Glycyrrhiza extracts, Glycyrrhizin, and licorice extracts.

Sucrose derivatives include, for example, those obtained by substituting the OH group or the H group of sucrose with other substituents and examples thereof include halogen derivatives of sucrose (sucralose), oxathiazinonedioxide derivatives, sugar alcohols, aldonic acids, and uronic acids.

Caloric sweetener typically means sweet substances having an energy of 4 kcal/g. An energy of a sweet substance is already known or can be determined by measuring a content by HPLC or the like and calculating by multiplying the content by an energy conversion factor, or measuring a heat of physical combustion using a calorie meter (for example, a bomb calorimeter) and correcting the heat with a digestion-absorption rate, an heat given off or the like. Non-restrictive examples of the caloric sweetener include sucrose, lactose, glucose, maltose, starch syrup, a high-fructose corn syrup, and fructose.

Non-caloric sweeteners typically refer to those having the nature of being difficult to be digested in the body and consequently having a reduced energy to be taken into and means sweet substances having an energy of less than 2 kcal/g, preferably less than 1 kcal/g, and further preferably less than 0.5 kcal/g. Nonrestrictive examples of the non-caloric sweetener include non-caloric hexoses such as allulose (psicose) and allose, non-caloric pentoses such as xylose and arabinose, non-caloric tetroses such as erythrose and threose, and non-caloric sugar alcohols such as erythritol and allitol.

Further, sweet substances can also be classified based on the energy (calorie) level. For example, the sweet substances can be classified into sweet substances having an energy of 4 kcal/g or more and sweet substances having an energy of less than 4 kcal/g. The sweet substances having an energy of less than 4 kcal/g can further be classified into sweet substances having an energy of less than 3 kcal/g, sweet substances having an energy of less than 2.5 kcal/g, sweet substances having an energy of less than 2 kcal/g, sweet substances having an energy of less than 1.5 kcal/g, sweet substances having an energy of less than 1 kcal/g, sweet substances having an energy of less than 0.5 kcal/g, sweet substances having an energy of 1 kcal/g or more and less than 4 kcal/g, sweet substances having an energy of 2 kcal/g or more and less than 4 kcal/g, sweet substances having an energy of 3 kcal/g or more and less than 4 kcal/g, sweet substances having an energy of 2 kcal/g or more and less than 3 kcal/g, sweet substances having an energy of 1 kcal/g or more and less than 2 kcal/g, sweet substances having an energy of 0 kcal/g or more and less than 2 kcal/g, and sweet substances having an energy of 0 kcal/g or more and less than 1 kcal/g. Examples of the sweet substance having an energy of 4 kcal/g or more include sucrose, lactose, glucose, maltose, starch syrup, a high-fructose corn syrup, and fructose, examples of the sweet substance having an energy of 2 kcal/g or more and less than 4 kcal/g include sorbitol, xylitol, D-xylose, D-ribose, D-tagatose, and arabinose, and examples of the sweet substance having an energy of 0 kcal/g or more and less than 2 kcal/g include D-allulose, erythritol, allose, erythrose, threose, and allitol.

An oral composition in embodiments of the present invention contains a low-intensity sweetener. In further embodiments of the present invention, the following oral composition (hereinafter also referred to as the oral composition of Embodiment A) is provided.

An oral composition comprising:
(a) a high-intensity sweetener having a good taste quality, in an amount corresponding to a sweetness intensity X1,
(b) a sodium source at less than 10 mM,
(c) an amino acid, or derivative or salt thereof, in an amount less than a taste recognition threshold, and
(d) low-intensity sweetener in an amount corresponding to a sweetness intensity X4
wherein
the oral composition has a sweetness of sweetness intensity X5 exhibited by the components (a) to (d) and 0.1 < X1 + X4 < X5 is satisfied. The oral composition in embodiments of the present invention does not contain any component as a sweetener other than (a) the high-intensity sweetener having a good taste quality in an amount corresponding to a sweetness intensity X1 and (d) the low-intensity sweetener in an amount corresponding to a sweetness intensity X4.

In embodiments of the present invention, the low-intensity sweetener comprises a sweetener selected from hexose, pentose, tetrose, a polysaccharide having a terminal sugar of aldose or ketose, sugar alcohols, and a combination thereof. In other embodiments of the present invention, the low-intensity sweetener contains a sweetener selected from glucose, sucrose, fructose, maltose, an oligosaccharide, a high-fructose corn syrup, lactose, psicose, allose, tagatose, xylose, ribose, and a combination thereof.

The X4 of "sweetness intensity X4" can be 0 to 0.5, 0 to 1.0, 0 to 1.5, 0 to 2.0, 0 to 2.5, 0 to 3.0, 0 to 3.5, 0 to 4.0, 0 to 4.5, 0 to 5.0, 0 to 5.5, 0 to 6.0, 0 to 6.5, 0 to 7.0, 0 to 7.5, 0 to 8.0, 0 to 8.25, 0 to 8.5, 0 to 8.75, 0 to 9.0, 0 to 9.25, 0 to 9.5, 0 to 9.75, 0 to 10.0, 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.05 to 6.0, 0.05 to 6.5, 0.05 to 7.0, 0.05 to 7.5, 0.05 to 8.0, 0.05 to 8.25, 0.05 to 8.5, 0.05 to 8.75, 0.05 to 9.0, 0.05 to 9.25, 0.05 to 9.5, 0.05 to 9.75, 0.05 to 10.0, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 6.0, 0.1 to 6.5, 0.1 to 7.0, 0.1 to 7.5, 0.1 to 8.0, 0.1 to 8.25, 0.1 to 8.5, 0.1 to 8.75, 0.1 to 9.0, 0.1 to 9.25, 0.1 to 9.5, 0.1 to 9.75, 0.1 to 10.0, 0.5 to 0.5, 0.5 to 1.0, 0.5 to 1.5, 0.5 to 2.0, 0.5 to 2.5, 0.5 to 3.0, 0.5 to 3. 5, 0.5 to 4.0, 0.5 to 4.5, 0.5 to 5.0, 0.5 to 5.5, 0.5 to 6.0, 0.5 to 6.5, 0.5 to 7.0, 0.5 to 7. 5, 0.5 to 8.0, 0.5 to 8.25, 0.5 to 8.5, 0.5 to 8.75, 0.5 to 9.0, 0.5 to 9.25, 0.5 to 9.5, 0.5 to 9.75, 0.5 to 10.0, 1.0 to 0.5, 1.0 to 1.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.0 to 6.0, 1.0 to 6.5, 1.0 to 7.0, 1.0 to 7.5, 1.0 to 8.0, 1.0 to 8.25, 1.0 to 8.5, 1.0 to 8.75, 1.0 to 9.0, 1.0 to 9.25, 1.0 to 9.5, 1.0 to 9.75, 1.0 to 10.0, 1.5 to 0.5, 1.5 to 1.0, 1.5 to 1.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 1.5 to 6.0, 1.5 to 6.5, 1.5 to 7.0, 1.5 to 7.5, 1.5 to 8.0, 1.5 to 8.25, 1.5 to 8.5, 1.5 to 8.75, 1.5 to 9.0, 1.5 to 9.25, 1.5 to 9.5, 1.5 to 9.75, 1.5 to 10.0, 2.0 to 0.5, 2.0 to 1.0, 2.0 to 1.5, 2.0 to 2.0, 2.0 to 2.5, 2.0 to 3.0, 2.0 to 3.5, 2.0 to 4.0, 2.0 to 4.5, 2.0 to 5.0, 2.0 to 5.5, 2.0 to 6.0, 2.0 to 6.5, 2.0 to 7.0, 2.0 to 7.5, 2.0 to 8.0, 2.0 to 8.25, 2.0 to 8.5, 2.0 to 8.75, 2.0 to 9.0, 2.0 to 9.25, 2.0 to 9.5, 2.0 to 9.75, 2.0 to 10.0, 2.5 to 0.5, 2.5 to 1.0, 2.5 to 1.5, 2.5 to 2.0, 2.5 to 2.5, 2.5 to 3.0, 2.5 to 3.5, 2.5 to 4.0, 2.5 to 4.5, 2.5 to 5.0, 2.5 to 5.5, 2.5 to 6.0, 2.5 to 6.5, 2.5 to 7.0, 2.5 to 7.5, 2.5 to 8.0, 2.5 to 8.25, 2.5 to 8.5, 2.5 to 8.75, 2.5 to 9.0, 2.5 to 9.25, 2.5 to 9.5, 2.5 to 9.75, 2.5 to 10.0.

The X4 can also be 0 to 10.5, 0 to 11.0, 0 to 11.5, 0 to 12.0, 0 to 12.5, 0 to 13.0, 0 to 13.5, 0 to 14.0, 0 to 14.5, 0 to 15.0, 0.05 to 10.5, 0.05 to 11.0, 0.05 to 11.5, 0.05 to 12.0, 0.05 to 12.5, 0.05 to 13.0, 0.05 to 13.5, 0.05 to 14.0, 0.05 to 14.5, 0.05 to 15.0, 0.1 to 10.5, 0.1 to 11.0, 0.1 to 11.5, 0.1 to 12.0, 0.1 to 12.5, 0.1 to 13.0, 0.1 to 13.5, 0.1 to 14.0, 0.1 to 14.5, 0.1 to 15.0, 0.5 to 10.5, 0.5 to 11.0, 0.5 to 11.5, 0.5 to 12.0, 0.5 to 12.5, 0.5 to 13.0, 0.5 to 13.5, 0.5 to 14.0, 0.5 to 14.5, 0.5 to 15.0, 1.0 to 10.5, 1.0 to 11.0, 1.0 to 11.5, 1.0 to 12.0, 1.0 to 12.5, 1.0 to 13.0, 1.0 to 13.5, 1.0 to 14.0, 1.0 to 14.5, 1.0 to 15.0, 1.5 to 10.5, 1.5 to 11.0, 1.5 to 11.5, 1.5 to 12.0, 1.5 to 12.5, 1.5 to 13.0, 1.5 to 13.5, 1.5 to 14.0, 1.5 to 14.5, 1.5 to 15.0, 2.0 to 10.5, 2.0 to 11.0, 2.0 to 11.5, 2.0 to 12.0, 2.0 to 12.5, 2.0 to 13.0, 2.0 to 13.5, 2.0 to 14.0, 2.0 to 14.5, 2.0 to 15.0, 2.5 to 10.5, 2.5 to 11.0, 2.5 to 11.5, 2.5 to 12.0, 2.5 to 12.5, 2.5 to 13.0, 2.5 to 13.5, 2.5 to 14.0, 2.5 to 14.5, 2.5 to 15.0.

The amount corresponding to a sweet intensity X4 of a low-intensity sweetener refers to an amount (concentration) which provides a sweetness of a sweetness intensity X4 under conditions in which the low-intensity sweetener is dissolved in water having the same volume as the oral composition of the present invention at 20°C.

The X5 is not particularly limited as long as it is greater than X1 + X4 and can be 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8. 0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, 10.5 to 12.5. The X3 can also be 4.0 to 18, 4.0 to 16, 4. 0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7. 0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16, 10.5 to 15.5.

### Other components

The oral composition of the present invention can suitably contain an antioxidant (sodium erythorbate or the like), an emulsifier (sucrose esters of fatty acids, sorbitan esters of fatty acids, polyglycerin esters of fatty acids or the like), an acidulant, and a flavor, as long as the effects of the present invention are not affected.

In an embodiment of the present invention, an oral composition is provided comprising:
(a) a high-intensity sweetener having a good taste quality, in an amount corresponding to a sweetness intensity X1,
(b) a sodium source of less than 10 mM, and
(c) an amino acid or a derivative or a salt thereof, in an amount less than a taste recognition threshold,
wherein the oral composition has a sweetness of a sweetness intensity X2 exhibited by the components (a) to (c) and 0.1 < X1 < X2 is satisfied,
wherein the high-intensity sweetener having a good taste quality comprises a high-intensity sweetener selected from rebaudioside D, rebaudioside M, mogroside V, a Luo han guo extract, and a combination thereof, preferably a high-intensity sweetener selected from rebaudioside D, rebaudioside M, and a combination thereof,
X1 is 0.5 to 5.5, preferably 1.0 to 5.5, and more preferably 2.0 to 5.0, and
the amino acid or a derivative or a salt thereof comprises an amino acid selected from DL-alanine, L-serine, glycine, L-arginine, L-glutamic acid, L-valine, and L-glutamine. In the present embodiment, an amount of the high-intensity sweetener is about 20 ppm to about 600 ppm, about 30 ppm to about 550 ppm, or about 55 ppm to about 490 ppm.

In an embodiment of the present invention, an oral composition is provided comprising:
(a) a high-intensity sweetener having a good taste quality in an amount corresponding to a sweetness intensity X1
(b) a sodium source of less than 10 mM, and
(c) an amino acid or a derivative or a salt thereof in an amount less than a taste recognition threshold,
wherein the oral composition has a sweetness of a sweetness intensity X2 exhibited by the components (a) to (c) and 0.1 < X1 < X2 is satisfied,
wherein the high-intensity sweetener having a good taste quality comprises a high-intensity sweetener selected from rebaudioside D, rebaudioside M, mogroside V, a Luo han guo extract, and a combination thereof, preferably a high-intensity sweetener selected from rebaudioside D, rebaudioside M, and a combination thereof,
X1 is 0.5 to 10.0, preferably 1.5 to 9.0, and more preferably 2.0 to 8.0, and
the amino acid or a derivative or a salt thereof comprises an amino acid selected from DL-alanine, L-serine, glycine, L-arginine, L-glutamic acid, L-valine, and L-glutamine. In the present embodiment, an amount of the high-intensity sweetener can be about 20 ppm to about 600 ppm, about 30 ppm to about 550 ppm, or about 55 ppm to about 490 ppm.

In an embodiment of the present invention, an oral composition is provided comprising:
(a) a high-intensity sweetener having a good taste quality, in an amount corresponding to a sweetness intensity X1
(b) a sodium source of less than 10 mM,
(c) an amino acid or a derivative or a salt thereof, in an amount less than a taste recognition threshold, and
(d) a low-intensity sweetener, in an amount corresponding to a sweetness intensity X4,
wherein the oral composition has a sweetness of a sweetness intensity X5 exhibited by the components (a) to (d) and 0.1 < X1 + X4 < X5 is satisfied,
wherein the high-intensity sweetener having a good taste quality comprises a high-intensity sweetener selected from rebaudioside D, rebaudioside M, mogroside V, a Luo han guo extract, and a combination thereof, preferably a high-intensity sweetener selected from rebaudioside D, rebaudioside M, and a combination thereof,
X1 is 0.5 to 5.5, preferably 1.0 to 5.5, and more preferably 2.0 to 5.0,
the amino acid or a derivative or a salt thereof comprises an amino acid selected from DL-alanine, L-serine, glycine, L-arginine, L-glutamic acid, L-valine, and L-glutamine,
the low-intensity sweetener comprises a sweetener selected from glucose, sucrose, fructose, maltose, an oligosaccharide, a high-fructose corn syrup, lactose, psicose, allose, tagatose, xylose, ribose, and a combination thereof, and
X4 is 0.05 to 6.0, preferably 0.05 to 5.0, more preferably 0.1 to 4.0. In the present embodiment, an amount of the high-intensity sweetener is about 20 ppm to about 600 ppm, about 30 ppm to about 550 ppm, or about 55 ppm to about 490 ppm.

In an embodiment of the present invention, an oral composition is provided comprising:
(a) a high-intensity sweetener having a good taste quality, in an amount corresponding to a sweetness intensity X1
(b) a sodium source of less than 10 mM, and
(c) an amino acid or a derivative or a salt thereof, in an amount less than a taste recognition threshold,
wherein the oral composition has a sweetness of a sweetness intensity X2 exhibited by the components (a) to (c) and 0.1 < X1 < X2 is satisfied,
wherein the high-intensity sweetener having a good taste quality comprises a high-intensity sweetener selected from rebaudioside D, rebaudioside M, mogroside V, a Luo han guo extract, and a combination thereof, preferably a high-intensity sweetener selected from rebaudioside D, rebaudioside M, and a combination thereof,
X1 is 0.5 to 5.5, preferably 1.0 to 5.5, and more preferably 2.0 to 5.0,
the amino acid or a derivative or a salt thereof comprises an amino acid or an amino acid salt selected from L-leucine, L-threonine, L-proline, L-asparagine, and L-lysine hydrochloride. In the present embodiment, an amount of the high-intensity sweetener is about 20 ppm to about 600 ppm, about 30 ppm to about 550 ppm, or about 150 ppm to about 400 ppm.

In an embodiment of the present invention, an oral composition is provided comprising:
(a) a high-intensity sweetener having a good taste quality, in an amount corresponding to a sweetness intensity X1
(b) a sodium source of less than 10 mM, and
(c) an amino acid or a derivative or a salt thereof, in an amount less than a taste recognition threshold,
wherein the oral composition has a sweetness of a sweetness intensity X2 exhibited by the components (a) to (c) and 0.1 < X1 < X2 is satisfied,
wherein the high-intensity sweetener having a good taste quality comprises a high-intensity sweetener selected from rebaudioside D, rebaudioside M, mogroside V, a Luo han guo extract, and a combination thereof, preferably a high-intensity sweetener selected from rebaudioside D, rebaudioside M, and a combination thereof,
X1 is 0.5 to 10.0, preferably 1.5 to 9.0, and more preferably 2.0 to 8.0,
the amino acid or a derivative or a salt thereof comprises an amino acid or an amino acid salt selected from L-leucine, L-threonine, L-proline, L-asparagine, and L-lysine hydrochloride. In the present embodiment, an amount of the high-intensity sweetener is about 20 ppm to about 600 ppm, about 30 ppm to about 550 ppm, or about 150 ppm to about 400 ppm.

In an embodiment of the present invention, an oral composition is provided comprising:
(a) a high-intensity sweetener having a good taste quality, in an amount corresponding to a sweetness intensity X1,
(b) a sodium source of less than 10 mM,
(c) an amino acid or a derivative or a salt thereof, in an amount less than a taste recognition threshold, and
(d) a low-intensity sweetener in an amount corresponding to a sweetness intensity X4,
wherein the oral composition has a sweetness of a sweetness intensity X5 exhibited by the components (a) to (d) and 0.1 < X1 + X4 < X5 is satisfied,
wherein the high-intensity sweetener having a good taste quality comprises a high-intensity sweetener selected from rebaudioside D, rebaudioside M, mogroside V, a Luo han guo extract, and a combination thereof, preferably a high-intensity sweetener selected from rebaudioside D, rebaudioside M, and a combination thereof,
X1 is 0.5 to 5.5, preferably 1.0 to 5.5, and more preferably 2.0 to 5.0,
the amino acid or a derivative or a salt thereof comprises an amino acid or an amino acid salt selected from L-leucine, L-threonine, L-proline, L-asparagine, and L-lysine hydrochloride,
the low-intensity sweetener comprises a sweetener selected from glucose, sucrose, fructose, maltose, an oligosaccharide, a high-fructose corn syrup, lactose, psicose, allose, tagatose, xylose, ribose, and a combination thereof,
X4 is 0.05 to 6.0, preferably 0.05 to 5.0, and more preferably 0.1 to 4.0. In the present embodiment, an amount of the high-intensity sweetener can be about 20 ppm to about 600 ppm, about 30 ppm to about 550 ppm, or about 150 ppm to about 400 ppm.

In an embodiment of the present invention, an oral composition is provided comprising:
(a) a high-intensity sweetener having a good taste quality, in an amount corresponding to a sweetness intensity X1,
(b) 1 to 23 mg/100 ml, 1 to 20 mg/100 ml, 1 to 15 mg/100 ml or 5 to 15 mg/100 ml of sodium, and
(c) an amino acid or a derivative or a salt thereof, in an amount less than a taste recognition threshold,
wherein the oral composition has a sweetness of a sweetness intensity X2 exhibited by the components (a) to (c) and 0.1 < X1 < X2 is satisfied,
wherein the high-intensity sweetener having a good taste quality comprises a high-intensity sweetener selected from rebaudioside D, rebaudioside M, mogroside V, a Luo han guo extract, and a combination thereof, preferably a high-intensity sweetener selected from rebaudioside D, rebaudioside M, and a combination thereof,
X1 is 0.5 to 5.5, preferably 1.0 to 5.5, and more preferably 2.0 to 5.0, and
the amino acid or a derivative or a salt thereof comprises an amino acid selected from DL-alanine, L-serine, glycine, L-arginine, L-glutamic acid, L-valine, and L-glutamine. In the present embodiment, an amount of the high-intensity sweetener is about 20 ppm to about 600 ppm, about 30 ppm to about 550 ppm, or about 55 ppm to about 490 ppm.

In an embodiment of the present invention, an oral composition is provided comprising:
(a) a high-intensity sweetener having a good taste quality, in an amount corresponding to a sweetness intensity X1
(b) 1 to 23 mg/100 ml, 1 to 20 mg/100 ml, 1 to 15 mg/100 ml or 5 to 15 mg/100 ml of sodium, and
(c) an amino acid or a derivative or a salt thereof, in an amount less than a taste recognition threshold,
wherein the oral composition has a sweetness of a sweetness intensity X2 exhibited by the components (a) to (c) and 0.1 < X1 < X2 is satisfied,
wherein the high-intensity sweetener having a good taste quality comprises a high-intensity sweetener selected from rebaudioside D, rebaudioside M, mogroside V, a Luo han guo extract, and a combination thereof, preferably a high-intensity sweetener selected from rebaudioside D, rebaudioside M, and a combination thereof,
X1 is 0.5 to 10.0, preferably 1.5 to 9.0, and more preferably 2.0 to 8.0, and
the amino acid or a derivative or a salt thereof comprises an amino acid selected from DL-alanine, L-serine, glycine, L-arginine, L-glutamic acid, L-valine, and L-glutamine. In the present embodiment, an amount of the high-intensity sweetener can be about 20 ppm to about 600 ppm, about 30 ppm to about 550 ppm, or about 55 ppm to about 490 ppm.

In an embodiment of the present invention, an oral composition is provided comprising:
(a) a high-intensity sweetener having a good taste quality, in an amount corresponding to a sweetness intensity X1
(b) 1 to 23 mg/100 ml, 1 to 20 mg/100 ml, 1 to 15 mg/100 ml or 5 to 15 mg/100 ml of sodium,
(c) an amino acid or a derivative or a salt thereof, in an amount less than a taste recognition threshold, and
(d) a low-intensity sweetener in an amount corresponding to a sweetness intensity X4,
wherein the oral composition has a sweetness of a sweetness intensity X5 exhibited by the components (a) to (d) and 0.1 < X1 + X4 < X5 is satisfied,
wherein the high-intensity sweetener having a good taste quality comprises a high-intensity sweetener selected from rebaudioside D, rebaudioside M, mogroside V, a Luo han guo extract, and a combination thereof, preferably a high-intensity sweetener selected from rebaudioside D, rebaudioside M, and a combination thereof,
X1 is 0.5 to 5.5, preferably 1.0 to 5.5, and more preferably 2.0 to 5.0,
the amino acid or a derivative or a salt thereof comprises an amino acid selected from DL-alanine, L-serine, glycine, L-arginine, L-glutamic acid, L-valine, and L-glutamine,
the low-intensity sweetener comprises a sweetener selected from glucose, sucrose, fructose, maltose, an oligosaccharide, a high-fructose corn syrup, lactose, psicose, allose, tagatose, xylose, ribose, and a combination thereof, and
X4 is 0.05 to 6.0, preferably 0.05 to 5.0, more preferably 0.1 to 4.0. In the present embodiment, an amount of the high-intensity sweetener is about 20 ppm to about 600 ppm, about 30 ppm to about 550 ppm, or about 55 ppm to about 490 ppm.

In an embodiment of the present invention, an oral composition is provided comprising:
(a) a high-intensity sweetener having a good taste quality, in an amount corresponding to a sweetness intensity X1
(b) 1 to 23 mg/100 ml, 1 to 20 mg/100 ml, 1 to 15 mg/100 ml or 5 to 15 mg/100 ml of sodium, and
(c) an amino acid or a derivative or a salt thereof, in an amount less than a taste recognition threshold,
wherein the oral composition has a sweetness of a sweetness intensity X2 exhibited by the components (a) to (c) and 0.1 < X1 < X2 is satisfied,
wherein the high-intensity sweetener having a good taste quality comprises a high-intensity sweetener selected from rebaudioside D, rebaudioside M, mogroside V, a Luo han guo extract, and a combination thereof, preferably a high-intensity sweetener selected from rebaudioside D, rebaudioside M, and a combination thereof,
X1 is 0.5 to 5.5, preferably 1.0 to 5.5, and more preferably 2.0 to 5.0,
the amino acid or a derivative or a salt thereof comprises an amino acid or an amino acid salt selected from L-leucine, L-threonine, L-proline, L-asparagine, and L-lysine hydrochloride. In the present embodiment, an amount of the high-intensity sweetener is about 20 ppm to about 600 ppm, about 30 ppm to about 550 ppm, or about 150 ppm to about 400 ppm.

In an embodiment of the present invention, an oral composition is provided comprising:
(a) a high-intensity sweetener having a good taste quality, in an amount corresponding to a sweetness intensity X1
(b) 1 to 23 mg/100 ml, 1 to 20 mg/100 ml, 1 to 15 mg/100 ml or 5 to 15 mg/100 ml of sodium, and
(c) an amino acid or a derivative or a salt thereof, in an amount less than a taste recognition threshold,
wherein the oral composition has a sweetness of a sweetness intensity X2 exhibited by the components (a) to (c) and 0.1 < X1 < X2 is satisfied,
wherein the high-intensity sweetener having a good taste quality comprises a high-intensity sweetener selected from rebaudioside D, rebaudioside M, mogroside V, a Luo han guo extract, and a combination thereof, preferably a high-intensity sweetener selected from rebaudioside D, rebaudioside M, and a combination thereof,
X1 is 0.5 to 10.0, preferably 1.5 to 9.0, and more preferably 2.0 to 8.0,
the amino acid or a derivative or a salt thereof comprises an amino acid or an amino acid salt selected from L-leucine, L-threonine, L-proline, L-asparagine, and L-lysine hydrochloride. In the present embodiment, an amount of the high-intensity sweetener is about 20 ppm to about 600 ppm, about 30 ppm to about 550 ppm, or about 150 ppm to about 400 ppm.

In an embodiment of the present invention, an oral composition is provided comprising:
(a) a high-intensity sweetener having a good taste quality, in an amount corresponding to a sweetness intensity X1,
(b) 1 to 23 mg/100 ml, 1 to 20 mg/100 ml, 1 to 15 mg/100 ml or 5 to 15 mg/100 ml of sodium,
(c) an amino acid or a derivative or a salt thereof, in an amount less than a taste recognition threshold, and
(d) a low-intensity sweetener in an amount corresponding to a sweetness intensity X4,
wherein the oral composition has a sweetness of a sweetness intensity X5 exhibited by the components (a) to (d) and 0.1 < X1 + X4 < X5 is satisfied,
wherein the high-intensity sweetener having a good taste quality comprises a high-intensity sweetener selected from rebaudioside D, rebaudioside M, mogroside V, a Luo han guo extract, and a combination thereof, preferably a high-intensity sweetener selected from rebaudioside D, rebaudioside M, and a combination thereof,
X1 is 0.5 to 5.5, preferably 1.0 to 5.5, and more preferably 2.0 to 5.0,
the amino acid or a derivative or a salt thereof comprises an amino acid or an amino acid salt selected from L-leucine, L-threonine, L-proline, L-asparagine, and L-lysine hydrochloride,
the low-intensity sweetener comprises a sweetener selected from glucose, sucrose, fructose, maltose, an oligosaccharide, a high-fructose corn syrup, lactose, psicose, allose, tagatose, xylose, ribose, and a combination thereof,
X4 is 0.05 to 6.0, preferably 0.05 to 5.0, and more preferably 0.1 to 4.0. In the present embodiment, an amount of the high-intensity sweetener can be about 20 ppm to about 600 ppm, about 30 ppm to about 550 ppm, or about 150 ppm to about 400 ppm.

### 2. Method for producing an oral composition

The present invention provides, as a second aspect, the following method for producing the oral composition with an enhanced sweetness (hereinafter, referred to as "the production method of the present invention").

A method for producing an oral composition of the present invention comprising:
(a) adding a high-intensity sweetener having a good taste quality in an amount corresponding to a sweetness intensity X1,
(b) adding a sodium source of less than 10 mM, and
(c) adding an amino acid or a derivative thereof, or a salt thereof in an amount less than a taste recognition threshold.

An oral composition produced by the method of the present invention is an oral composition of the present invention described in the above section "1. Oral composition having a high-intensity sweetener having a good taste quality with an enhanced sweetness." Additionally, the "raw material" in the method of the present invention can be each material or a mixture thereof required for the production of the oral composition, and can further include additional components such as a preservative, a flavor, a carrier, a fruit juice. The "raw material" can be made up of several materials.

In the method of the present invention, any of the following (a) to (c) can be carried out first.
(a) adding the high-intensity sweetener having a good taste quality in an amount corresponding to a sweetness intensity X1,
(b) adding the sodium source of less than 10 mM, and
(c) adding the amino acid or a derivative or a salt thereof in an amount less than a taste recognition threshold.

Two or more steps can be carried out simultaneously. For example, (a) and (b), (a) and (c), (b) and (c), or (a) and (b) and (c) can be carried out simultaneously.

In Step (a), a high-intensity sweetener having a good taste quality in an amount corresponding to a sweetness intensity X1 is added to the raw material but a natural sugar in an amount corresponding to a sweetness intensity X1 does not need to be added at once but can be added in several divided batches.

Similarly, when a sodium source of less than 10 mM is added in Step (b), the sodium source of less than 10 mM does not need to be added at once but can be added in several divided batches. The sodium source added to the raw material in Step (b) can be selected from the sodium sources described in the above section "1. Oral composition having a high-intensity sweetener having a good taste quality with an enhanced sweetness."

Similarly, when an amino acid of less than a taste recognition threshold is added in Step (c), the amino acid of less than a taste recognition threshold does not need to be added at once but can be added in several divided batches. The amino acid or a derivative thereof, or a salt thereof, added to the raw material in Step (c) can be selected from the amino acids or derivatives thereof, or salts thereof described in the above section "1. Oral composition having a high-intensity sweetener having a good taste quality with an enhanced sweetness."

Herein "addition" means not only the actual operation of adding either of the components (a), (b), and (c) to the raw materials but also the operation of adjusting amounts of the components (a), (b), and (c) to predetermined amounts respectively in the oral composition to be finally produced through the production process of the oral composition of the present invention.

For example, a case in which when the first raw material contains a fruit juice, a grain, a bean, and extracts thereof and accordingly the raw material contains one or more of any of the components (a), (b), and (c) in advance, and the second raw material to be mixed with the first raw material also contains the components (a), (b), and (c) whereby the oral composition of the present invention can be produced by mixing the first and the second raw materials, the operation of individually adding the components (a), (b), and (c) to the raw materials is not carried out but in the method of the present invention Steps (a) to (c) are considered to have been carried out as long as the oral composition of the present invention to be finally produced comprises (a) a high-intensity sweetener having a good taste quality in an amount corresponding to a sweetness intensity X1, (b) a sodium source of less than 10 mM, and (c) an amino acid or a derivative or a salt thereof of less than a taste recognition threshold.

The production method of an embodiment of the present invention (hereinafter, also referred to as the production method of Embodiment A) further comprises adding (d) a low-intensity sweetener in an amount corresponding to a sweetness intensity X4. The production method of Embodiment A enables the production of the oral composition of the Embodiment A. Steps (a) to (d) can be carried out separately, or 2 or more steps can be carried out simultaneously. For example, (a) and (b), (a) and (c), (a) and (d), (b) and (c), (b) and (d), (c) and (d), (a) and (b) and (c), (a) and (b) and (d), (a) and (c) and (d), (b) and (c) and (d), or (a) and (b) and (c) and (d) can be carried out simultaneously.

In the method of the present invention, the "oral composition", "sweetness intensity X1", "high-intensity sweetener having a good taste quality", "sweetness intensity X2", an amount of a sodium source, form of sodium in the oral composition, "amino acid or a derivative thereof, or a salt thereof", "sweetness intensity X3", "optional component", "low-intensity sweetener", "sweetness intensity X4", "sweetness intensity X5", "other components", and energy are defined as described in the above section for the oral composition, and the numerical values described in the above section for the oral composition are applicable to the numerical values as they are.

### 3. Method for enhancing a degree of sweetness of the oral composition

The present invention provides, as a third aspect, the following method for enhancing a degree of sweetness of an oral composition (hereinafter, referred to as "the enhancement method of the present invention").

A method for enhancing a degree of sweetness of an oral composition, containing a high-intensity sweetener having a good taste quality, comprises adding a sodium source at less than 10 mM and an amino acid at less than a taste recognition threshold to the oral composition.

According to the enhancement method of the present invention, a sweetness of the oral composition is enhanced and an oral composition having a sweetness more than a sweetness intensity obtained when the component (a) is simply added to the oral composition can be provided. Specifically, a sodium source and an amino acid are added simultaneously or separately to the oral composition containing a predetermined amount of a high-intensity sweetener having a good taste quality, and after addition, a sodium source of less than 10 mM and an amino acid of less than a taste recognition threshold are contained in the oral composition thereby to provide the oral composition with a sweetness more than a sweetness intensity obtained when the high-intensity sweetener having a good taste quality alone is added.

In embodiments of the present invention, a sodium source of less than 10 mM and an amino acid less than a taste recognition threshold are added to an oral composition containing a high-intensity sweetener having a good taste quality in an amount corresponding to a sweetness intensity X1. In other embodiments of the present invention, an amount of a sodium source added is an amount so that the amount of sodium in the oral composition is about 9.5 mM or less, about 9.0 mM or less, about 8.5 mM or less, about 8.0 mM or less, about 8.5 mM or less, about 7.0 mM or less, about 7.5 mM or less, about 6.0 mM or less, about 5.5 mM or less, about 5.0 mM or less, about 4.5 mM or less, about 4.0 mM or less, about 3.5 mM or less, about 2.0 mM or less, about 1.5 mM or less, about 1.0 mM or less, about 0.5 mM or less, about 9.5 mM or less, about 9.5 mM or less. In other embodiments, an amount of a sodium source can be an amount so that an amount of sodium in the oral composition ranges from about 0.1 to about 9.9 mM, about 0.5 to about 9.9 mM, about 1.0 to about 9.9 mM, about 1.5 to about 9.9 mM, about 2.0 to about 9.9 mM, about 2.5 to about 9.9 mM, about 3.0 to about 9.9 mM, about 3.5 to about 9.9 mM, about 4.0 to about 9.9 mM, about 4.5 to about 9.9 mM, about 5.0 to about 9.9 mM, about 5.5 to about 9.9 mM, about 6.0 to about 9.9 mM, about 6.5 to about 9.9 mM, about 7.0 to about 9.9 mM, about 7.5 to about 9.9 mM, about 8.0 to about 9.9 mM, about 8.5 to about 9.9 mM, about 9.0 to about 9.9 mM, about 9.5 to about 9.9 mM, about 0.1 to about 9.5 mM, about 0.1 to about 9.0 mM, about 0.1 to about 8.5 mM, about 0.1 to about 8.0 mM, about 0.1 to about 7.5 mM, about 0.1 to about 7.0 mM, about 0.1 to about 6.5 mM, about 0.1 to about 6.0 mM, about 0.1 to about 5.5 mM, about 0.1 to about 5.0 mM, about 0.1 to about 4.5 mM, about 0.1 to about 4.0 mM, about 0.1 to about 3.5 mM, about 0.1 to about 3.0 mM, about 0.1 to about 2.5 mM, about 0.1 to about 2.0 mM, about 0.1 to about 1.5 mM, about 0.1 to about 1.0 mM, about 0.1 to about 0.5 mM, about 0.5 to about 9.5 mM, about 0.5 to about 9.5 mM, about 0.5 to about 9.0 mM, about 0.5 to about 8.5 mM, about 0.5 to about 8.0 mM, about 0.5 to about 7.5 mM, about 0.5 to about 7.0 mM, about 0.5 to about 6.5 mM, about 0.5 to about 6.0 mM, about 0.5 to about 5.5 mM, about 0.5 to about 5.0 mM, about 0.5 to about 4.5 mM, about 0.5 to about 4.0 mM, about 0.5 to about 3.5 mM, about 0.5 to about 3.0 mM, about 0.5 to about 2.5 mM, about 0.5 to about 2.0 mM, about 0.5 to about 1.5 mM, about 0.5 to about 1.0 mM, about 1.0 to about 9.5 mM, about 1.0 to about 9.0 mM, about 1.0 to about 8.5 mM, about 1.0 to about 8.0 mM, about 1.0 to about 7.5 mM, about 1.0 to about 7.0 mM, about 1.0 to about 6.5 mM, about 1.0 to about 6.0 mM, about 1.0 to about 5.5 mM, about 1.0 to about 5.0 mM, about 1.0 to about 4.5 mM, about 1.0 to about 4.0 mM, about 1.0 to about 3.5 mM, about 1.0 to about 3.0 mM, about 1.0 to about 2.5 mM, about 1.0 to about 2.0 mM, about 1.0 to about 1.5 mM, about 1.5 to about 9.5 mM, about 1.5 to about 9.0 mM, about 1.5 to about 8.5 mM, about 1.5 to about 8.0 mM, about 1.5 to about 7.5 mM, about 1.5 to about 7.0 mM, about 1.5 to about 6.5 mM, about 1.5 to about 6.0 mM, about 1.5 to about 5.5 mM, about 1.5 to about 5.0 mM, about 1.5 to about 4.5 mM, about 1.5 to about 4.0 mM, about 1.5 to about 3.5 mM, about 1.5 to about 3.0 mM, about 1.5 to about 2.5 mM, about 1.5 to about 2.0 mM, about 2.0 to about 9.5 mM, about 2.0 to about 9.0 mM, about 2.0 to about 8.5 mM, about 2.0 to about 8.0 mM, about 2.0 to about 7.5 mM, about 2.0 to about 7.0 mM, about 2.0 to about 6.5 mM, about 2.0 to about 6.0 mM, about 2.0 to about 5.5 mM, about 2.0 to about 5.0 mM, about 2.0 to about 4.5 mM, about 2.0 to about 4.0 mM, about 2.0 to about 3.5 mM, about 2.0 to about 3.0 mM, about 2.0 to about 2.5 mM, about 2.5 to about 9.5 mM, about 2.5 to about 9.0 mM, about 2.5 to about 8.5 mM, about 2.5 to about 8.0 mM, about 2.5 to about 7.5 mM, about 2.5 to about 7.0 mM, about 2.5 to about 6.5 mM, about 2.5 to about 6.0 mM, about 2.5 to about 5.5 mM, about 2.5 to about 5.0 mM, about 2.5 to about 4.5 mM, about 2.5 to about 4.0 mM, about 2.5 to about 3.5 mM, about 2.5 to about 3.0 mM, about 3.0 to about 9.5 mM, about 3.0 to about 9.0 mM, about 3.0 to about 8.5 mM, about 3.0 to about 8.0 mM, about 3.0 to about 7.5 mM, about 3.0 to about 7.0 mM, about 3.0 to about 6.5 mM, about 3.0 to about 6.0 mM, about 3.0 to about 5.5 mM, about 3.0 to about 5.0 mM, about 3.0 to about 4.5 mM, about 3.0 to about 4.0 mM, about 3.0 to about 3.5 mM, about 3.5 to about 9.5 mM, about 3.5 to about 9.0 mM, about 3.5 to about 8.5 mM, about 3.5 to about 8.0 mM, about 3.5 to about 7.5 mM, about 3.5 to about 7.0 mM, about 3.5 to about 6.5 mM, about 3.5 to about 6.0 mM, about 3.5 to about 5.5 mM, about 3.5 to about 5.0 mM, about 3.5 to about 4.5 mM, about 3.5 to about 4.0 mM, about 4.0 to about 9.5 mM, about 4.0 to about 9.0 mM, about 4.0 to about 8.5 mM, about 4.0 to about 8.0 mM, about 4.0 to about 7.5 mM, about 4.0 to about 7.0 mM, about 4.0 to about 6.5 mM, about 4.0 to about 6.0 mM, about 4.0 to about 5.5 mM, about 4.0 to about 5.0 mM, about 4.0 to about 4.5 mM, about 4.5 to about 9.5 mM, about 4.5 to about 9.0 mM, about 4.5 to about 8.5 mM, about 4.5 to about 8.0 mM, about 4.5 to about 7.5 mM, about 4.5 to about 7.0 mM, about 4.5 to about 6.5 mM, about 4.5 to about 6.0 mM, about 4.5 to about 5.5 mM, about 4.5 to about 5.0 mM, about 5.0 to about 9.5 mM, about 5.0 to about 9.0 mM, about 5.0 to about 8.5 mM, about 5.0 to about 8.0 mM, about 5.0 to about 7.5 mM, about 5.0 to about 7.0 mM, about 5.0 to about 6.5 mM, about 5.0 to about 6.0 mM, about 5.0 to about 5.5 mM, about 5.5 to about 9.5 mM, about 5.5 to about 9.0 mM, about 5.5 to about 8.5 mM, about 5.5 to about 8.0 mM, about 5.5 to about 7.5 mM, about 5.5 to about 7.0 mM, about 5.5 to about 6.5 mM, about 5.5 to about 6.0 mM, about 6.0 to about 9.5 mM, about 6.0 to about 9.0 mM, about 6.0 to about 8.5 mM, about 6.0 to about 8.0 mM, about 6.0 to about 7.5 mM, about 6.0 to about 7.0 mM, about 6.0 to about 6.5 mM, about 6.5 to about 9.5 mM, about 6.5 to about 9.0 mM, about 6.5 to about 8.5 mM, about 6.5 to about 8.0 mM, about 6.5 to about 7.5 mM, about 6.5 to about 7.0 mM, about 7.0 to about 9.5 mM, about 7.0 to about 9.0 mM, about 7.0 to about 8.5 mM, about 7.0 to about 8.0 mM, about 7.0 to 7.5 mM.

Additionally, in embodiments of the present invention, an amount of an amino acid added can be an amount so that an amount of the amino acid in the oral composition is 100 mM or less, 90 mM or less, 80 mM or less, 70 mM or less, 60 mM or less, 50 mM or less, 40 mM or less, 30 mM or less, 20 mM or less, 15 mM or less, 14 mM or less, 13 mM or less, 12 mM or less, 11 mM or less, 10 mM or less, 9.5 mM or less, 9.0 mM or less, 8.5 mM or less, 8.0 mM or less, 7.5 mM or less, 7.0 mM or less, 6.5 mM or less, 6.0 mM or less, 5.5 mM or less, 5.0 mM or less, 4.5 mM or less, 4.0 mM or less, 3.5 mM or less, 3.0 mM or less, 2.5 mM or less, 2.0 mM or less, 1.5 mM or less, 1.0 mM or less, 0.5 mM or less, 0.5 to 100 mM, 1.0 to 100 mM, 1.5 to 100 mM, 2.0 to 100 mM, 2.5 to 100 mM, 3.0 to 100 mM, 3.5 to 100 mM, 4.0 to 100 mM, 4.5 to 100 mM, 5.0 to 100 mM, 5.5 to 100 mM, 6.0 to 100 mM, 6.5 to 100 mM, 7.0 to 100 mM, 7.5 to 100 mM, 8.0 to 100 mM, 8.5 to 100 mM, 9.0 to 100 mM, 9.5 to 100 mM, 10 to 100 mM, 11 to 100 mM, 12 to 100 mM, 13 to 100 mM, 14 to 100 mM, 15 to 100 mM, 20 to 100 mM, 30 to 100 mM, 40 to 100 mM, 50 to 100 mM, 60 to 100 mM, 70 to 100 mM, 80 to 100 mM, 90 to 100 mM, 0.5 to 90 mM, 1.0 to 90 mM, 1.5 to 90 mM, 2.0 to 90 mM, 2.5 to 90 mM, 3.0 to 90 mM, 3.5 to 90 mM, 4.0 to 90 mM, 4.5 to 90 mM, 5.0 to 90 mM, 5.5 to 90 mM, 6.0 to 90 mM, 6.5 to 90 mM, 7.0 to 90 mM, 7.5 to 90 mM, 8.0 to 90 mM, 8.5 to 90 mM, 9.0 to 90 mM, 9.5 to 90 mM, 10 to 90 mM, 11 to 90 mM, 12 to 90 mM, 13 to 90 mM, 14 to 90 mM, 15 to 90 mM, 20 to 90 mM, 30 to 90 mM, 40 to 90 mM, 50 to 90 mM, 60 to 90 mM, 70 to 90 mM, 80 to 90 mM, 0.5 to 80 mM, 1.0 to 80 mM, 1.5 to 80 mM, 2.0 to 80 mM, 2.5 to 80 mM, 3.0 to 80 mM, 3.5 to 80 mM, 4.0 to 80 mM, 4.5 to 80 mM, 5.0 to 80 mM, 5.5 to 80 mM, 6.0 to 80 mM, 6.5 to 80 mM, 7.0 to 80 mM, 7.5 to 80 mM, 8.0 to 80 mM, 8.5 to 80 mM, 9.0 to 80 mM, 9.5 to 80 mM, 10 to 80 mM, 11 to 80 mM, 12 to 80 mM, 13 to 80 mM, 14 to 80 mM, 15 to 80 mM, 20 to 80 mM, 30 to 80 mM, 40 to 80 mM, 50 to 80 mM, 60 to 80 mM, 70 to 80 mM, 0.5 to 70 mM, 1.0 to 70 mM, 1.5 to 70 mM, 2.0 to 70 mM, 2.5 to 70 mM, 3.0 to 70 mM, 3.5 to 70 mM, 4.0 to 70 mM, 4.5 to 70 mM, 5.0 to 70 mM, 5.5 to 70 mM, 6.0 to 70 mM, 6.5 to 70 mM, 7.0 to 70 mM, 7.5 to 70 mM, 8.0 to 70 mM, 8.5 to 70 mM, 9.0 to 70 mM, 9.5 to 70 mM, 10 to 70 mM, 11 to 70 mM, 12 to 70 mM, 13 to 70 mM, 14 to 70 mM, 15 to 70 mM, 20 to 70 mM, 30 to 70 mM, 40 to 70 mM, 50 to 70 mM, 60 to 70 mM, 0.5 to 60 mM, 1.0 to 60 mM, 1.5 to 60 mM, 2.0 to 60 mM, 2.5 to 60 mM, 3.0 to 60 mM, 3.5 to 60 mM, 4.0 to 60 mM, 4.5 to 60 mM, 5.0 to 60 mM, 5.5 to 60 mM, 6.0 to 60 mM, 6.5 to 60 mM, 7.0 to 60 mM, 7.5 to 60 mM, 8.0 to 60 mM, 8.5 to 60 mM, 9.0 to 60 mM, 9.5 to 60 mM, 10 to 60 mM, 11 to 60 mM, 12 to 60 mM, 13 to 60 mM, 14 to 60 mM, 15 to 60 mM, 20 to 60 mM, 30 to 60 mM, 40 to 60 mM, 50 to 60 mM, 0.5 to 50 mM, 1.0 to 50 mM, 1.5 to 50 mM, 2.0 to 50 mM, 2.5 to 50 mM, 3.0 to 50 mM, 3.5 to 50 mM, 4.0 to 50 mM, 4.5 to 50 mM, 5.0 to 50 mM, 5.5 to 50 mM, 6.0 to 50 mM, 6.5 to 50 mM, 7.0 to 50 mM, 7.5 to 50 mM, 8.0 to 50 mM, 8.5 to 50 mM, 9.0 to 50 mM, 9.5 to 50 mM, 10 to 50 mM, 11 to 50 mM, 12 to 50 mM, 13 to 50 mM, 14 to 50 mM, 15 to 50 mM, 20 to 50 mM, 30 to 50 mM, 40 to 50 mM, 0.5 to 40 mM, 1.0 to 40 mM, 1.5 to 40 mM, 2.0 to 40 mM, 2.5 to 40 mM, 3.0 to 40 mM, 3.5 to 40 mM, 4.0 to 40 mM, 4.5 to 40 mM, 5.0 to 40 mM, 5.5 to 40 mM, 6.0 to 40 mM, 6.5 to 40 mM, 7.0 to 40 mM, 7.5 to 40 mM, 8.0 to 40 mM, 8.5 to 40 mM, 9.0 to 40 mM, 9.5 to 40 mM, 10 to 40 mM, 11 to 40 mM, 12 to 40 mM, 13 to 40 mM, 14 to 40 mM, 15 to 40 mM, 20 to 40 mM, 30 to 40 mM, 0.5 to 30 mM, 1.0 to 30 mM, 1.5 to 30 mM, 2.0 to 30 mM, 2.5 to 30 mM, 3.0 to 30 mM, 3.5 to 30 mM, 4.0 to 30 mM, 4.5 to 30 mM, 5.0 to 30 mM, 5.5 to 30 mM, 6.0 to 30 mM, 6.5 to 30 mM, 7.0 to 30 mM, 7.5 to 30 mM, 8.0 to 30 mM, 8.5 to 30 mM, 9.0 to 30 mM, 9.5 to 30 mM, 10 to 30 mM, 11 to 30 mM, 12 to 30 mM, 13 to 30 mM, 14 to 30 mM, 15 to 30 mM, 20 to 30 mM, 0.5 to 20 mM, 1.0 to 20 mM, 1.5 to 20 mM, 2.0 to 20 mM, 2.5 to 20 mM, 3.0 to 20 mM, 3.5 to 20 mM, 4.0 to 20 mM, 4.5 to 20 mM, 5.0 to 20 mM, 5.5 to 20 mM, 6.0 to 20 mM, 6.5 to 20 mM, 7.0 to 20 mM, 7.5 to 20 mM, 8.0 to 20 mM, 8.5 to 20 mM, 9.0 to 20 mM, 9.5 to 20 mM, 10 to 20 mM, 11 to 20 mM, 12 to 20 mM, 13 to 20 mM, 14 to 20 mM, 15 to 20 mM.

In the sweetness enhancement method of the present invention, the "oral composition", "sweetness intensity X1", "high-intensity sweetener having a good taste quality", "sweetness intensity X2", amount of sodium source, form of sodium in the oral composition, "amino acid or a derivative thereof, or a salt thereof", "sweetness intensity X3", "optional component", "low-intensity sweetener", "sweetness intensity X4", "sweetness intensity X5", "other components", and energy are defined as described in the above section for the oral composition and the numerical values described in the above section for the sparkling beverages are applicable to the numerical values as they are.

### 4. Concentrate for providing the oral composition

The present invention provides, as a fourth aspect, a concentrate for providing the following oral composition (hereinafter, referred to as "the enhancement method of the present invention").

The oral composition comprises:
(a) a high-intensity sweetener having a good taste quality in an amount corresponding to a sweetness intensity X1
(b) a sodium source of less than 10 mM, and
(c) an amino acid or a derivative or a salt thereof in an amount less than a taste recognition threshold,
wherein the oral composition has a sweetness of a sweetness intensity X2 exhibited by the components (a) to (c) and 0.1 < X1 < X2 is satisfied.

The concentrate of the present invention is diluted in any ratio and used for providing the oral composition. The "oral composition" is the same as described in "1. Oral composition having a high-intensity sweetener having a good taste quality with an enhanced sweetness." For example, the concentrate of the present invention can be used as a syrup or an undiluted solution in a beverage. In this instance, the concentrate can be diluted 2-fold, 3-fold, 4-fold, 5-fold, 6-fold, 7-fold, 8-fold, 9-fold, or 10-fold and used. Further, a concentrate of the present invention is preferable in the aspects of preservability and transportability because it is concentrated. The concentrate of the present invention can be solid or liquid.

The concentrate of the present invention is a 2- to 10-fold concentrate, preferably 3- to 9-fold concentrate, more preferably 4- to 8-fold concentrate, and further preferably 5- to 7-fold concentrate, of the oral composition of the present invention.

The concentrate in an embodiment of the present invention is a 5-fold concentrate of the sparkling beverage of the present invention and comprises:
(a) a high-intensity sweetener having a good taste quality, in an amount corresponding to a sweetness intensity X1a
(b) a sodium source at less than 50 mM, and
(c) an amino acid or a derivative or a salt thereof in an amount less than 5-fold of a taste recognition threshold,
wherein the concentrate has a sweetness of a sweetness intensity X2a exhibited by the components (a) to (c) and 0.5 < X1a < X2a < 100, preferably 1.0 < X1a < X2a < 50, and more preferably 2.0 < X1a < X2a < 25 is satisfied.

The concentrate in another embodiment of the present invention is a 10-fold concentrate of the sparkling beverage of the present invention and comprises:
(a) a high-intensity sweetener having a good taste quality, in an amount corresponding to a sweetness intensity X1b
(b) a sodium source at less than 100 mM, and
(c) an amino acid or a derivative or a salt thereof, in an amount less than 10-fold of a taste recognition threshold,
wherein the concentrate has a sweetness of a sweetness intensity X2b exhibited by the components (a) to (c) and 1.0 < X1b < X2b < 200, preferably 2.0 < X1b < X2b < 100, and more preferably 4.0 < X1b < X2b < 50 is satisfied.

In the present description, the term "about" means that a subject matter is in ranges of ±25%, ±10%, ±5%, ±3%, ±2%, or ±1%, of the numerical value following the "about." For example, "about 10" means a range from 7.5 to 12.5. In the present description, "mM" means a molar concentration and means 1 x 10⁻³ mol/L.

### EXAMPLES

Hereinafter, the present invention will be specifically described with reference to examples, but the present invention is not limited to the following examples.

### Example 1 - Evaluation of the sweetness enhancement effect by sodium and amino acid addition

A sensory evaluation was carried out for samples using various amino acids shown in Table 2 to evaluate the sweetness enhancement effect when amino acids and sodium were added to beverages.

First, natural sugar {sucrose (manufactured by Pacific Sugar Mfg. Co., Ltd.), glucose (Showa Sangyo Co., Ltd.)}, rebaudioside D (RebD) (purity 95% or more), sodium gluconate (purity 98% or more) and various amino acids were dissolved in pure water in the ratios shown in Table 2 below to prepare beverage samples. For the amino acids, glycine (purity 98.5% or more), DL-alanine (purity 98% or more), valine (purity 98% or more), L-serine (purity 98.5% or more), L-phenylalanine (purity 99% or more), L-tryptophan (purity 99% or more), L-methionine (purity 99% or more), L-proline (purity 98% or more), L-glutamine (purity 98% or more), L-arginine (purity 98.5% or more), L-glutamic acid (purity 99% or more), and L-aspartic acid (purity 99% or more) were used. The amounts of the amino acids added were determined in consideration of the detection thresholds described in the literature (Susan S. Schiffman et al., "Comparison of Taste Qualities and Thresholds of D- and L-Amino Acids", Physiology & Behavior, Vol. 27, pp. 51-59 (1981)). Additionally, a solution to which no amino acid was added was taken to be a control (Cont.) solution. Note that Brix in Table 2 was calculated from a concentration of the natural sugar, an amount of sodium was calculated from a sodium gluconate concentration, and an energy (kcal/100 ml) was calculated with RebD and sodium derivation being 0 (kcal/100 ml), respectively. Normally, an amino acid content in a beverage can be confirmed by a calculation from an additive amount of the amino acid or by a known method such as high-performance liquid chromatography (HPLC).

The sweetness enhancement effect by sodium and amino acids was verified by the sensory comparison of sweetness intensities of these solutions. The evaluation was carried out by those (5 to 7 persons) who had received sensory trainings as panelists. Of those who carried out the evaluation, the numbers of persons who sensed the sweetness as having been enhanced in comparison with the control solution were shown in Table 2 as the sweetness enhancement effect. For example, beverage samples for which 4 persons sensed enhanced sweetness out of 7 persons who evaluated were evaluated as "4/7".

**Table 2**

| Amino acid classification | | Neutral | | | | | | | | | Basic | Acidic | |
|---|---|---|---|---|---|---|---|---|---|---|---|---|---|
| | - | Alkyl group | | | OH group | Aromatic group | | Sulfur-containing group | Imino group | Amide group | | | |
| Amino acid | Cont. | Glycine | Alanine | Valine | Serine | Phenylalanine | Tryptophan | Methionine | Proline | Glutamine | Arginine | Glutamic acid | Aspartic acid |
| Sucrose (w/v%) | 1 | 1 | 1 | 1 | 1 | 1 | 1 | 1 | 1 | 1 | 1 | 1 | 1 |
| Glucose (w/v%) | 3.5 | 3.5 | 3.5 | 3.5 | 3.5 | 3.5 | 3.5 | 3.5 | 3.5 | 3.5 | 3.5 | 3.5 | 3.5 |
| RebD (ppm) | 208 | 208 | 208 | 208 | 208 | 208 | 208 | 208 | 208 | 208 | 208 | 208 | 208 |
| Sodium gluconate(mM) | 5 | 5 | 5 | 5 | 5 | 5 | 5 | 5 | 5 | 5 | 5 | 5 | 5 |
| As amount of sodium (mg/100 ml) | 11.5 | 11.5 | 11.5 | 11.5 | 11.5 | 11.5 | 11.5 | 11.5 | 11.5 | 11.5 | 11.5 | 11.5 | 11.5 |
| Glycine (mM) | 0 | 30.9 | 0 | 0 | 0 | 0 | 0 | 0 | 0 | 0 | 0 | 0 | 0 |
| Alanine (mM) | 0 | 0 | 15 | 0 | 0 | 0 | 0 | 0 | 0 | 0 | 0 | 0 | 0 |
| Valine (mM) | 0 | 0 | 0 | 20 | 0 | 0 | 0 | 0 | 0 | 0 | 0 | 0 | 0 |
| L-Serine (mM) | 0 | 0 | 0 | 0 | 20 | 0 | 0 | 0 | 0 | 0 | 0 | 0 | 0 |
| L-Phenylalanine (mM) | 0 | 0 | 0 | 0 | 0 | 6.61 | 0 | 0 | 0 | 0 | 0 | 0 | 0 |
| L-Tryptophan (mM) | 0 | 0 | 0 | 0 | 0 | 0 | 2.29 | 0 | 0 | 0 | 0 | 0 | 0 |
| L-Methionine (mM) | 0 | 0 | 0 | 0 | 0 | 0 | 0 | 3.72 | 0 | 0 | 0 | 0 | 0 |
| L-Proline (mM) | 0 | 0 | 0 | 0 | 0 | 0 | 0 | 0 | 15.1 | 0 | 0 | 0 | 0 |
| Glutamine (mM) | 0 | 0 | 0 | 0 | 0 | 0 | 0 | 0 | 0 | 7.5 | 0 | 0 | 0 |
| L-Arginine (mM) | 0 | 0 | 0 | 0 | 0 | 0 | 0 | 0 | 0 | 0 | 1.2 | 0 | 0 |
| Glutamic acid (mM) | 0 | 0 | 0 | 0 | 0 | 0 | 0 | 0 | 0 | 0 | 0 | 0.1 | 0 |
| L-Aspartic acid (mM) | 0 | 0 | 0 | 0 | 0 | 0 | 0 | 0 | 0 | 0 | 0 | 0 | 0.182 |
| Energy (Kcal/100 ml) | 18 | 18.9 | 18.5 | 18.9 | 18.8 | 18.4 | 18.2 | 18.2 | 18.7 | 18.4 | 18.1 | 18.0 | 18.0 |
| Sweetness enhancement effect | - | 4/7 | 4/5 | 4/5 | 5/6 | 2/6 | 2/6 | 2/6 | 3/7 | 4/5 | 4/7 | 2/6 | 3/6 |

### Example 2 - Confirmation of sweetness enhancement effect at several concentration levels

Several amino acids were confirmed for their sweetness enhancement effect by (1) actual measured values of taste recognition thresholds and (2) at several concentration levels.

### (1) Actual measurement of taste recognition thresholds

Aqueous solutions of alanine, serine, glycine, arginine, glutamic acid, valine, and glutamine were prepared at the concentrations shown in Table 3 below. Each of the samples contained only water and the amino acid. These samples were evaluated by those (5 to 6 persons) who had received sensory training as panelists, using the criteria below.

### Evaluation criteria

A: No taste is sensed other than water
B: Taste different from water but cannot specify
C: Taste is sensed
D: Extremely intense taste is sensed

The evaluation results are shown in Table 3 below.

**Table 3: Evaluation of taste recognition threshold**

| | (mM) | A | B | C | D | | | (mM) | A | B | C | D |
|---|---|---|---|---|---|---|---|---|---|---|---|---|
| DL-Alanine | 5 | 4 | 2 | 0 | 0 | | L-Serine | 20 | 3 | 2 | 0 | 0 |
| | 10 | 3 | 2 | 1 | 0 | | | 30 | 1 | 4 | 0 | 0 |
| | 20 | 2 | 3 | 1 | 0 | | | 40 | 0 | 4 | 1 | 0 |
| | 30 | 1 | 0 | 4 | 0 | | | 50 | 0 | 1 | 3 | 1 |
| | 40 | 1 | 0 | 5 | 0 | | | 60 | 0 | 0 | 3 | 2 |
| | | | | | | | | | | | | |
| | (mM) | A | B | C | D | | | (mM) | A | B | C | D |
| Glycine | 40 | 3 | 1 | 1 | 0 | | L-Arginine | 1 | 4 | 1 | 0 | 0 |
| | 50 | 0 | 4 | 1 | 0 | | | 2.5 | 0 | 2 | 3 | 0 |
| | 75 | 0 | 2 | 2 | 1 | | | 5 | 0 | 0 | 3 | 2 |
| | 100 | 0 | 0 | 3 | 2 | | | 10 | 0 | 0 | 3 | 2 |
| | 125 | 0 | 0 | 2 | 3 | | | 30 | 0 | 0 | 0 | 5 |
| | | | | | | | | | | | | |

| | (mM) | A | B | C | D | | | (mM) | A | B | C | D |
|---|---|---|---|---|---|---|---|---|---|---|---|---|
| L-Glutamic acid | 0.1 | 5 | 0 | 0 | 0 | | L-Valine | 20 | 2 | 3 | 1 | 0 |
| | 0.25 | 2 | 2 | 1 | 0 | | | 30 | 1 | 4 | 1 | 0 |
| | 0.5 | 0 | 1 | 1 | 3 | | | 40 | 0 | 3 | 1 | 2 |
| | 1 | 0 | 0 | 1 | 4 | | | 50 | 0 | 0 | 3 | 3 |
| | 2.5 | 0 | 0 | 0 | 5 | | | 60 | 0 | 0 | 3 | 3 |
| | | | | | | | | | | | | |

| | (mM) | A | B | C | D | | | | | | | |
|---|---|---|---|---|---|---|---|---|---|---|---|---|
| L-Glutamine | 5 | 4 | 0 | 2 | 0 | | | | | | | |
| | 10 | 2 | 1 | 3 | 0 | | | | | | | |
| | 20 | 1 | 0 | 4 | 1 | | | | | | | |
| | 30 | 0 | 0 | 2 | 4 | | | | | | | |
| | 40 | 0 | 0 | 0 | 6 | | | | | | | |

Based on the results in the above table, a taste recognition threshold of each of the amino acids was calculated based on the concentration at which a half or more of the sensory testers sensed as "Taste is sensed" and shown in Table 4 below.

**Table 4**

| Amino acid | Taste recognition threshold (mM) |
|---|---|
| DL-Alanine | 20 to 30 |
| L-Serine | 40 to 50 |
| Glycine | 50 to 75 |
| L-Arginine | 1 to 2.5 |
| L-Glutamic acid | 0.25 to 0.5 |
| L-Valine | 40 to 50 |
| L-Glutamine | 5 to 10 |

### (2) Confirmation of sweetness enhancement effect at several concentration levels

Based on the taste recognition thresholds obtained in the above (1), the sweetness enhancement effect was confirmed at several concentration levels. Natural sugar {sucrose (manufactured by Pacific Sugar Mfg. Co., Ltd.), glucose (Showa Sangyo Co., Ltd.)}, rebaudioside D (RebD) (purity 95% or more), sodium gluconate (purity 98% or more) and various amino acids were dissolved in pure water in the ratios shown in Tables 5 to 11 below to prepare beverage samples. For the amino acids, glycine (purity 98.5% or more), DL-alanine (purity 98% or more), L-valine (purity 98% or more), L-serine (purity 98.5% or more), L-glutamine (purity 98% or more), and L-glutamic acid (purity 99% or more) were used. Additionally, a solution to which no amino acid was added was decided to be a control (Cont.) solution. Note that Brix in Table 5 was calculated from a concentration of the natural sugar, an amount of sodium was calculated from a sodium gluconate concentration, and an energy (kcal/100 ml) was calculated with RebD and sodium derivation being 0 (kcal/100 ml), respectively.

The sweetness enhancement effect by sodium and amino acids was verified by the sensory comparison of sweetness intensities of these solutions. The evaluation was carried out by those (5 to 7 persons) who had received sensory training as panelists. Of those who carried out the evaluation, the numbers of persons who sensed the sweetness having been enhanced in comparison with the control solution were shown in Tables 5 to 11 as the sweetness enhancement effect. For example, beverage samples for which 4 persons sensed enhanced sweetness out of 7 persons who evaluated were evaluated as "4/7". The results for the respective amino acids are shown in Tables 5 to 11.

### (A) DL-Alanine

**Table 5: DL-Alanine (Taste recognition threshold: 20 to 30 mM)**

| Amino acid | Cont. | 5mM Ala | 10mM Ala | 15mM Ala | 20mM Ala | 25mM Ala |
|---|---|---|---|---|---|---|
| Sucrose (w/v%) | 1 | 1 | 1 | 1 | 1 | 1 |
| Glucose (w/v%) | 3.5 | 3.5 | 3.5 | 3.5 | 3.5 | 3.5 |
| RebD (ppm) | 208 | 208 | 208 | 208 | 208 | 208 |
| Sodium gluconate (mM) | 5 | 5 | 5 | 5 | 5 | 5 |
| As amount of sodium (mg/100 ml) | 11.5 | 11.5 | 11.5 | 11.5 | 11.5 | 11.5 |
| DL-Alanine (mM) | 0 | 5 | 10 | 15 | 20 | 25 |
| Energy (Kcal/100 ml) | 18 | 18.2 | 18.4 | 18.5 | 18.7 | 18.9 |
| Sweetness enhancement effect | - | 2/5 | 3/5 | 4/5 | 1/5 | 0/5 |

**Table 6: L-Serine (Taste recognition threshold: 40 to 50 mM)**

| Amino acid | Cont. | 20mM Ser | 30mM Ser | 40mM Ser |
|---|---|---|---|---|
| Sucrose (w/v%) | 1 | 1 | 1 | 1 |
| Glucose (w/v%) | 3.5 | 3.5 | 3.5 | 3.5 |
| RebD (ppm) | 208 | 208 | 208 | 208 |
| Sodium gluconate (mM) | 5 | 5 | 5 | 5 |
| As amount of sodium (mg/100 ml) | 11.5 | 11.5 | 11.5 | 11.5 |
| L-Serine (mM) | 0 | 20 | 30 | 40 |
| Energy (Kcal/100 ml) | 18 | 18.8 | 19.3 | 19.7 |
| Sweetness enhancement effect | - | 5/6 | 2/6 | 4/6 |

### (C) Glycine

**Table 7: Glycine (Taste recognition threshold: 50 to 75 mM)**

| Amino acid | Cont. | 40mM Gly | 50mM Gly | 75mM Gly |
|---|---|---|---|---|
| Sucrose (w/v%) | 1 | 1 | 1 | 1 |
| Glucose (w/v%) | 3.5 | 3.5 | 3.5 | 3.5 |
| RebD (ppm) | 208 | 208 | 208 | 208 |
| Sodium gluconate (mM) | 5 | 5 | 5 | 5 |
| As amount of sodium (mg/100 ml) | 11.5 | 11.5 | 11.5 | 11.5 |
| Glycine (mM) | 0 | 40 | 50 | 75 |
| Energy (Kcal/100 ml) | 18 | 19.2 | 19.5 | 20.3 |
| Sweetness enhancement effect | - | 4/6 | 2/6 | 3/6 |

### (D) L-Arginine

**Table 8: L-Arginine (Taste recognition threshold: 1 to 2.5 mM)**

| Amino acid | Cont. | 0.5mM Arg | 1mM Arg | 2mM Arg |
|---|---|---|---|---|
| Sucrose (w/v%) | 1 | 1 | 1 | 1 |
| Glucose (w/v%) | 3.5 | 3.5 | 3.5 | 3.5 |
| RebD (ppm) | 208 | 208 | 208 | 208 |
| Sodium gluconate (mM) | 5 | 5 | 5 | 5 |
| As amount of sodium (mg/100 ml) | 11.5 | 11.5 | 11.5 | 11.5 |
| L-Arginine (mM) | 0 | 0.5 | 1 | 2 |
| Energy (Kcal/100 ml) | 18 | 18.0 | 18.1 | 18.1 |
| Sweetness enhancement effect | - | 5/6 | 4/6 | 5/6 |

### (E) L-Glutamic acid

**Table 9: L-Glutamic acid (Taste recognition threshold: 0.25 to 0.5 mM)**

| Amino acid | Cont. | 0.1mM Glu | 0.25mM Glu | 0.4mM Glu |
|---|---|---|---|---|
| Sucrose (w/v%) | 1 | 1 | 1 | 1 |
| Glucose (w/v%) | 3.5 | 3.5 | 3.5 | 3.5 |
| RebD (ppm) | 208 | 208 | 208 | 208 |
| Sodium gluconate (mM) | 5 | 5 | 5 | 5 |
| As amount of sodium (mg/100 ml) | 11.5 | 11.5 | 11.5 | 11.5 |
| Glutamic acid (mM) | 0 | 0.1 | 0.25 | 0.4 |
| Energy (Kcal/100 ml) | 18 | 18.0 | 18.0 | 18.0 |
| Sweetness enhancement effect | - | 2/6 | 4/6 | 5/6 |

### (F) L-Valine

**Table 10: L-Valine (Taste recognition threshold: 40 to 50 mM)**

| Amino acid | Cont. | 20mM Val | 30mM Val | 40mM Val |
|---|---|---|---|---|
| Sucrose (w/v%) | 1 | 1 | 1 | 1 |
| Glucose (w/v%) | 3.5 | 3.5 | 3.5 | 3.5 |
| RebD (ppm) | 208 | 208 | 208 | 208 |
| Sodium gluconate (mM) | 5 | 5 | 5 | 5 |
| As amount of sodium (mg/100 ml) | 11. 5 | 11.5 | 11.5 | 11.5 |
| L-Valine (mM) | 0 | 20 | 30 | 40 |
| Energy (Kcal/100 ml) | 18 | 18.9 | 19.4 | 19.9 |
| Sweetness enhancement effect | - | 4/5 | 1/5 | 1/5 |

### (G) L-Glutamine

**Table 11: L-Glutamine (Taste recognition threshold: 5 to 10 mM)**

| Amino acid | Cont. | 2.5mM Gln | 7.5mM Gln |
|---|---|---|---|
| Sucrose (w/v%) | 1 | 1 | 1 |
| Glucose (w/v%) | 3.5 | 3.5 | 3.5 |
| RebD (ppm) | 208 | 208 | 208 |
| Sodium gluconate (mM) | 5 | 5 | 5 |
| As amount of sodium (mg/100 ml) | 11. 5 | 11.5 | 11.5 |
| L-Glutamine (mM) | 0 | 2.5 | 7.5 |
| Energy (Kcal/100 ml) | 18 | 18.1 | 18.4 |
| Sweetness enhancement effect | - | 5/5 | 4/5 |

### Example 3 - Sweetness enhancement effect at different sweetness intensities

Sucrose, glucose, RebD, sodium gluconate, and DL-alanine were dissolved in pure water in the ratios shown in the table below to prepare sample solutions. The same raw material as Example 1 was used. For the solutions having respective sweetness intensities, the sweetness enhancement effect by the addition of sodium gluconate and DL-alanine were evaluated using the solutions to which sodium gluconate and DL-alanine were not added as control solutions. The evaluation was carried out by panelists (7 persons) who had received sensory trainings as panelists. Of those who carried out the evaluation, the numbers of persons who sensed the sweetness having been enhanced in comparison with the control solution were shown in Table 12 as the sweetness enhancement effect. For example, beverage samples with which 4 persons sensed enhanced sweetness out of 7 persons who evaluated were evaluated as "4/7." The results are shown in Table 12.

**Table 12**

| | | | |
|---|---|---|---|
| Sweetness intensity | 10 | 12 | 16 |
| Sucrose (w/v%) | 1.25 | 1.5 | 2 |
| Glucose (w/v%) | 4.4 | 5.25 | 7 |
| RebD (ppm) | 260 | 312 | 416 |
| Sodium gluconate (mM) | 5 | 5 | 5 |
| As amount of sodium (mg/100 ml) | 11.5 | 11.5 | 11.5 |
| DL-Alanine (mM) | 15 | 15 | 15 |
| Energy (Kcal/100 ml) | 23.1 | 27.5 | 36.5 |
| Sweetness enhancement effect | 4/7 | 6/7 | 4/7 |

### Example 4 - Sweetness intensity measurement of beverage samples

The beverage samples 1-1 to 1-4 shown in the table below were compared with a sucrose solution of Brix 8 (8 w/v%) and rated by the VAS scale thereby to calculate a sweetness intensity of each beverage sample. The evaluation was carried out by those (5 persons) who received sensory trainings as panelists. The results are shown in Table 13.

**Table 13**

| Sample name | 1-1 | 1-2 | 1-3 | 1-4 |
|---|---|---|---|---|
| Sucrose (w/v%) | 1 | 1 | 1 | 1 |
| Glucose (w/v%) | 3.5 | 3.5 | 3.5 | 3.5 |
| RebD (ppm) | 208 | 208 | 208 | 208 |
| Sodium gluconate (mM) | 0 | 0 | 5 | 5 |
| As amount of sodium (mg/100 ml) | 0 | 0 | 11.5 | 11.5 |
| DL-Alanine (mM) | 0 | 15 | 0 | 15 |
| Energy (Kcal/100 ml) | 18 | 18.5 | 18 | 18.5 |
| Sweetness enhancement effect | 7.96 | 9.88 | 9.82 | 12.30 |

### Example 5 - Evaluation of sweetness enhancement effect when various high-intensity sweeteners are contained

"Sucrose, glucose" and "Mog V or a Luo han guo extract" were dissolved in pure water as shown in Table 14 below to prepare sample solutions. Mog V used had a purity of 97.7% and the Luo han guo extract was a water-extract of Luo han guo fruit containing 40 wt% of mogroside V. Additionally, a solution to which sodium gluconate and DL-alanine were not added was taken as a control solution for the respective solutions. The obtained samples were evaluated for the sweetness enhancement effect by the sense in the same manner as in Example 1. The results are shown in Table 14.

**Table 14**

| Sweetener | MogV | Luo han guo extract |
|---|---|---|
| Sucrose (w/v%) | 1 | 1 |
| Glucose (w/v%) | 3.5 | 3.5 |
| Brix (sucrose + glucose derived) | 4.5 | 4.5 |
| MogV(ppm) | 208 | 0 |
| Luo han guo extract (ppm) | 0 | 208 |
| Sodium gluconate (mM) | 5 | 5 |
| As amount of sodium (mg/100 ml) | 11.5 | 11.5 |
| DL-Alanine (mM) | 15 | 15 |
| Energy (Kcal/100 ml) | 18.5 | 18.5 |
| Sweetness enhancement effect | 5/7 | 5/7 |

### Example 6 - Sweetness enhancement effect at different sodium concentrations

Sucrose, glucose, RebD, and glycine were dissolved in pure water in the ratios shown Table 15 below to prepare beverage samples. The obtained samples were sensorily evaluated for sweetness enhancement effect in the same manner as in Example 1. The results are shown in Table 15.

**Table 15**

| | | | |
|---|---|---|---|
| Sucrose (w/v%) | 1 | 1 | 1 |
| Glucose (w/v%) | 3.5 | 3.5 | 3.5 |
| Brix (sucrose + glucose derived) | 4.5 | 4.5 | 4.5 |
| RebD (ppm) | 208 | 208 | 208 |
| Sodium gluconate (mM) | 1 | 2.5 | 5 |
| As amount of sodium (mg/100 ml) | 2.3 | 5.75 | 11.5 |
| Glycine (mM) | 40 | 40 | 40 |
| Energy (Kcal/100 ml) | 19.2 | 19.2 | 19.2 |
| Sweetness enhancement effect | 6/7 | 4/7 | 4/6 |

### Example 7 - Evaluation on sweetness enhancement effect when various high-intensity sweeteners were contained

"Sucrose, glucose" and "RebM" were dissolved in pure water as shown in Table 16 below by the same method as in Example 5 to prepare sample solutions. The RebM used had a purity of 98%. Additionally, a solution to which sodium gluconate and DL-alanine were not added was taken as a control solution for the respective solutions. The obtained samples were sensorily evaluated for the sweetness enhancement effect in the same manner as in Example 1. The results are shown in Table 16.

**Table 16**

| | |
|---|---|
| Sucrose (w/v%) | 1 |
| Glucose (w/v%) | 3.5 |
| RebM (ppm) | 208 |
| Sodium gluconate (mM) | 5 |
| As amount of sodium (mg/100 ml) | 11.5 |
| DL-Alanine (mM) | 15 |
| Sweetness enhancement effect | 9/15 |

### Example 8 - Actual measurement of taste recognition thresholds

Several amino acids or salts thereof were actually measured for their taste recognition threshold by the same method as in Example 2(1). Aqueous solutions of leucine, threonine, proline, asparagine, and lysine hydrochloride at the concentrations shown in Table 17 below were prepared. Each of the samples contained only water and the amino acid or salt thereof. These samples were evaluated by those (6 to 7 persons) who had received sensory trainings as panelists, using the criteria below.

### Evaluation criteria

A: No taste is sensed other than water
B: Taste different from water but cannot specify
C: Taste is sensed
D: Extremely intense taste is sensed

The evaluation results are shown in Table 17 below.

**Table 17**

| L-Leucine (mM) | A | B | C | D | | L-Asparagine (mM) | A | B | C | D |
|---|---|---|---|---|---|---|---|---|---|---|
| 2.5mM | 4 | 1 | 1 | 0 | | 1mM | 5 | 2 | 0 | 0 |
| 5mM | 4 | 1 | 0 | 1 | | 2.5mM | 5 | 2 | 0 | 0 |
| 10mM | 3 | 2 | 0 | 1 | | 5mM | 1 | 5 | 1 | 0 |
| 20mM | 0 | 3 | 2 | 1 | | 10mM | 0 | 5 | 2 | 0 |
| 30mM | 0 | 0 | 5 | 1 | | 20mM | 0 | 2 | 5 | 0 |
| | | | | | | | | | | |

| L-Threonine (mM) | A | B | C | D | | L-Lysine hydrochloride (mM) | A | B | C | D |
|---|---|---|---|---|---|---|---|---|---|---|
| 20mM | 5 | 1 | 1 | 0 | | 0.2mM | 6 | 0 | 1 | 0 |
| 30mM | 4 | 1 | 2 | 0 | | 0.3mM | 4 | 1 | 2 | 0 |
| 40mM | 2 | 3 | 2 | 0 | | 0.4mM | 3 | 2 | 2 | 0 |
| 50mM | 0 | 3 | 4 | 0 | | 0.5mM | 0 | 3 | 4 | 0 |
| 60mM | 0 | 2 | 2 | 3 | | 1mM | 0 | 2 | 3 | 2 |
| | | | | | | | | | | |

| L-Proline (mM) | A | B | C | D | | | | | | |
|---|---|---|---|---|---|---|---|---|---|---|
| 20mM | 4 | 2 | 0 | 0 | | | | | | |
| 30mM | 3 | 2 | 1 | 0 | | | | | | |
| 40mM | 0 | 4 | 2 | 0 | | | | | | |
| 50mM | 0 | 1 | 4 | 1 | | | | | | |
| 60mM | 0 | 0 | 5 | 1 | | | | | | |

Based on the results in the above table, a taste recognition threshold of each of the amino acids was calculated based on the concentration at which half or more of the sensory testers sensed as "Taste is sensed" and shown in Table 18 below.

**Table 18**

| Amino acid or salt thereof | Taste recognition threshold (mM) |
|---|---|
| L-Leucine | 20 to 30mM |
| L-Threonine | 40 to 50mM |
| L-Proline | 40 to 50mM |
| L-Asparagine | 10 to 20mM |
| L-Lysine hydrochloride | 0.4 to 0.5mM |

### Example 9 - Confirmation of sweetness enhancement effect by amino acids or salts thereof

Based on the taste recognition thresholds obtained in Example 8, several amino acids or salts thereof were confirmed for their sweetness enhancement effect at several concentration levels by the same method as in Example 2(2). Natural sugar {sucrose (manufactured by Pacific Sugar Mfg. Co., Ltd.), glucose (Showa Sangyo Co., Ltd.)}, rebaudioside D (RebD) (purity 95% or more), sodium gluconate (purity 98% or more) and various amino acids or salts thereof were dissolved in pure water in the ratios shown in Table 19 below to prepare beverage samples. For the amino acids, L-leucine (purity 98.0% or more), L-threonine, (purity 98% or more), L-proline (purity 98% or more), L-asparagine (purity 99.0% or more), and L-lysine hydrochloride (purity 98.0% or more) were used. Additionally, a solution to which no amino acid was added was taken as a control (Cont.) solution. Note that Brix in Table 19 was calculated from a concentration of the natural sugar, an amount of sodium was calculated from a sodium gluconate concentration, and an energy (kcal/100 ml) was calculated with RebD and sodium derivation being 0 (kcal/100 ml), respectively.

The sweetness enhancement effect by sodium and amino acids or salts thereof was verified by the sensory comparison of sweetness intensities of these solutions. The evaluation was carried out by those (7 to 8 persons) who had received sensory trainings as panelists. Of those who carried out the evaluation, the numbers of persons who sensed the sweetness having been enhanced in comparison with the control solution were shown in Table 19 as the sweetness enhancement effect. For example, beverage samples with which 4 persons sensed enhanced sweetness out of 7 persons who evaluated were evaluated as "4/7". The results for respective amino acids are shown in Table 19.

**Table 19**

| Sample name | 2-1 | 2-2 | 2-3 | 2-4 | 2-5 | 2-6 | 2-7 |
|---|---|---|---|---|---|---|---|
| Sucrose (w/v%) | 1 | 1 | 1 | 1 | 1 | 1 | 1 |
| Glucose (w/v%) | 3.5 | 3.5 | 3.5 | 3.5 | 3.5 | 3.5 | 3.5 |
| RebD (ppm) | 208 | 208 | 208 | 208 | 208 | 208 | 208 |
| Sodium gluconate (mM) | 5 | 5 | 5 | 5 | 5 | 5 | 5 |
| As amount of sodium (mg/100 ml) | 11.5 | 11.5 | 11.5 | 11.5 | 11.5 | 11.5 | 11.5 |
| L-Leucine (mM) | 10 | 15 | 0 | 0 | 0 | 0 | 0 |
| L-Threonine (mM) | 0 | 0 | 25 | 0 | 0 | 0 | 0 |
| L-Proline (mM) | 0 | 0 | 0 | 25 | 0 | 0 | 0 |
| L-Asparagine (mM) | 0 | 0 | 0 | 0 | 2.5 | 10 | 0 |
| L-Lysine hydrochloride (mM) | 0 | 0 | 0 | 0 | 0 | 0 | 0.25 |
| Energy (Kcal/100 ml) | 18.5 | 18.8 | 19.2 | 19.2 | 18.1 | 18.5 | 18.0 |
| Sweetness enhancement effect | 1/7 | 2/7 | 4/8 | 1/8 | 4/7 | 6/7 | 3/8 |

## Claims

1. An oral composition comprising:
(a) high-intensity sweetener having a good taste quality, in an amount corresponding to a sweetness intensity X1,
(b) sodium source, at less than 10 mM, and
(c) amino acid, or derivative or salt thereof, in an amount less than a taste recognition threshold,
wherein the oral composition has a sweetness of sweetness intensity X2 exhibited by the components (a) to (c), and 0.1 < X1 < X2 is satisfied.

2. The oral composition according to claim 1, wherein the amino acid comprises an amino acid selected from basic amino acids, neutral amino acids having an alkyl group, an OH group or an amide group on a side chain, and combinations thereof.

3. The oral composition according to claim 1 or 2, wherein the oral composition has a sweetness of sweetness intensity X3 exhibited by the components (a) and (b) and 0.1 < X1 < X3 < X2 is satisfied.

4. The oral composition according to any one of claims 1 to 3, further comprising a low-intensity sweetener.

5. The oral composition according to any one of claims 1 to 4, wherein the high-intensity sweetener having a good taste quality comprises high intensity sweetener selected from rebaudioside D, rebaudioside M, mogroside V, Luo han guo extract, and combinations thereof.

6. The oral composition according to any one of claims 1 to 5, wherein the amino acid is one or more selected from amino acids having a molecular weight of 70 to 260.

7. The oral composition according to any one of claims 1 to 6, wherein the amino acid comprises amino acid selected from glycine, alanine, valine, isoleucine, leucine, serine, threonine, glutamine, asparagine, arginine, lysine, histidine, and combinations thereof.

8. The oral composition according to any one of claims 4 to 7, wherein the low-intensity sweetener comprises sweetener selected from hexose, pentose, tetrose, polysaccharide having a terminal sugar of aldose or ketose, a sugar alcohol, and combinations thereof.

9. The oral composition according to any one of claims 4 to 8, wherein the low-intensity sweetener comprises sweetener selected from glucose, sucrose, fructose, maltose, oligosaccharide, high-fructose corn syrup, lactose, psicose, allose, tagatose, xylose, ribose, and combinations thereof.

10. The oral composition according to any one of claims 1 to 9, which is a food.

11. The oral composition according to claim 10, wherein the food is a beverage.

12. A method for producing an oral composition according to any one of claims 1 to 11, comprising:
(a) adding the high-intensity sweetener having a good taste quality, in an amount corresponding to a sweetness intensity X1,
(b) adding the sodium source at less than 10 mM, and
(c) adding the amino acid, or derivative or salt thereof, in an amount less than a taste recognition threshold.

13. A method for enhancing a degree of sweetness of an oral composition containing a high-intensity sweetener having a good taste quality, comprising adding a sodium source at less than 10 mM, and amino acid at less than the taste recognition threshold, to the oral composition.
